# EUROPEAN PATENT APPLICATION

(11) **EP 4 845 094 A1**
(43) Date of publication of application: **25.11.2026**
(21) Application number: 26177479.8
(22) Date of filing: 08.05.2026
(51) Int. Cl.: H04L 9/32

(54) **DEVICE OWNERSHIP TRANSFER USING CRYPTOGRAPHICALLY BOUND DATA OBJECT**

(30) Priority: 08.05.2025 US 202519203049
(71) Applicant: Nvidia Corporation, Santa Clara, CA 95051 (US)
(72) Inventor: ZHANG, James, Santa Clara, 95051 (US); SAMPATH, Varun, Santa Clara, 95051 (US); HILLIER, Christopher, Santa Clara, 95051 (US); VOROBEY, Alexey, Santa Clara, 95051 (US)
(74) Representative: Mathys & Squire

(57) **Abstract**

Apparatuses, systems, methods, and techniques to implement Device Ownership Transfer (DOT). In at least one embodiment, a data object (e.g., a binary large object (blob)) may be bound cryptographically to a device (e.g., a silicon chip, a processor, a system, etc.), and data (e.g., keys) stored by the data object may be used to authenticate a command, firmware, and/or software. In at least one embodiment, a chip may utilize a fuse array and/or one or more device-specific identifiers to generate a Message Authentication Code (MAC) that binds the data object to the chip. Commands, firmware, and/or software may be signed with signatures that may be authenticated using the data (e.g., keys) stored in the data object. The chip may use the MAC to authenticate the data object to obtain the data (e.g., keys), which the chip may use to authenticate the signatures associated with the commands, firmware, and/or software.

## Description

### TECHNICAL FIELD

At least one embodiment pertains to processors, methods, techniques, and computing systems to facilitate secure device ownership transfer. For example, some embodiments involve cryptographic binding techniques for management of ownership of silicon devices in a secure and scalable manner. In some embodiments, this includes utilizing minimal one-time programmable (OTP ) fuses to establish and authenticate ownership, thereby enabling secure boot authentication and preventing ownership rollback.

### BACKGROUND

When a semiconductor device or chip boots, it authenticates firmware using a Root of Trust key associated with an owner of the Root of Trust key. The owner is typically a vendor, a manufacturer, or a purchaser of the device or chip. In modern data centers, securely provisioning the Root of trust Key enables secure boot authentication, which allows only authorized firmware to be executed by a device or chip. Methods of establishing ownership of silicon devices, for example, so the owner can control operation of the device can be improved.

### SUMMARY

The invention is defined by the claims. In order to illustrate the invention, aspects and embodiments which may or may not fall within the scope of the claims are described herein.

Apparatuses, systems, methods, and techniques to implement Device Ownership Transfer (DOT). In at least one embodiment, a data object (e.g., a binary large object (blob)) may be bound cryptographically to a device (e.g., a silicon chip, a processor, a system, etc.), and data (e.g., keys) stored by the data object may be used to authenticate a command, firmware, and/or software. In at least one embodiment, a chip may utilize a fuse array and/or one or more device-specific identifiers to generate a Message Authentication Code (MAC) that binds the data object to the chip. Commands, firmware, and/or software may be signed with signatures that may be authenticated using the data (e.g., keys) stored in the data object. The chip may use the MAC to authenticate the data object to obtain the data (e.g., keys), which the chip may use to authenticate the signatures associated with the commands, firmware, and/or software.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 illustrates a block diagram depicting an example system, in accordance with at least one embodiment;
FIG. 2A illustrates an example process that includes deriving a cryptographic symmetric key used to bind a DOT blob to a chip, in accordance with at least one embodiment;
FIG. 2B illustrates an example process that includes deriving a Message Authentication Code (MAC) to authenticate other cryptographic keys, in accordance with at least one embodiment;
FIG. 2C illustrates an example process that includes authenticating a blob, in accordance with at least one embodiment;
FIG. 3 illustrates an example of a system that transitions between chip states, and processes and/or keys required and/or available at each state, in accordance with at least one embodiment;
FIG. 4A illustrates an example of a flow diagram of a process that may be used to claim ownership of a hardware device or silicon chip, in accordance with at least one embodiment;
FIG. 4B illustrates an example of a flow diagram of a process that may be performed by a hardware device or silicon chip in response to one or more commands claiming ownership of the hardware device or silicon chip, in accordance with at least one embodiment;
FIG. 5 illustrates an example of a flow diagram of a process to authenticate requests provided to a hardware device or silicon chip by at least one external processor, in accordance with at least one embodiment;
FIG. 6A illustrates an example of a flow diagram of a process that may be used to unlock ownership of a hardware device or silicon chip, in accordance with at least one embodiment;
FIG. 6B illustrates an example of a flow diagram of a process that may be performed by a hardware device or silicon chip in response to an unlock command, in accordance with at least one embodiment;
FIG. 7 illustrates an example of a system that includes inputs and outputs of requests, such as application programming interface (API) requests, for state change for a secured chip, in accordance with at least one embodiment;
FIG. 8 illustrates an example of a system that includes a driver and/or runtime including one or more libraries to provide one or more application programming interfaces (APIs), in accordance with at least one embodiment;
FIG. 9 is a block diagram illustrating an example of a processor and storage, according to at least one embodiment;
FIG. 10A illustrates logic, according to at least one embodiment;
FIG. 10B illustrates logic, according to at least one embodiment;
FIG. 11 illustrates an example data center system, according to at least one embodiment; and
FIG. 12 is a block diagram illustrating a computer system, according to at least one embodiment.

### DETAILED DESCRIPTION

In at least some embodiments, one or more systems, one or more processors, one or more methods, and/or one or more techniques herein are used to, during a boot process performed by a device or chip, use a value permanently written to the device or chip to authenticate at least a key stored externally to the device or chip, and/or use the key to authenticate at least one of a command, firmware, or software before completing the boot process.

Ownership of a device or chip may be verified using Public Key Cryptography (PKC). PKC may be used to sign and authenticate data using a pair of keys: a public key and a private key. The owner obtains (e.g., generates) the pair of keys, and shares the public key with a recipient. The owner can use the private key, which the owner keeps a secret, to sign data (e.g., a message, a file, etc.) creating a digital signature. The recipient can use the public key to authenticate the digital signature, ensuring the authenticity of the data.

When a semiconductor device or chip boots, the device or chip may authenticate firmware signed with a private key of a cryptographic key pair using a Root of Trust key, which is a public key of the same cryptographic key pair. In some embodiments, ownership transfer of devices and/or chips must be performed securely (e.g., referred to as Device Ownership Transfer (DOT)), which means the devices and/or chips must be able to securely authenticate firmware and/or software to be performed, such as by verifying ownership.

For example, a manufacturer may have a cryptographic key pair that includes a manufacturer's private key and a manufacturer's public key. When the manufacturer manufactures a chip, the manufacturer may sign the firmware using the manufacturer's private key, install the firmware on the chip, and write the corresponding manufacturer's public key (referred to as a Root of Trust key or a fuse key) permanently into one time programable hardware (silicon), referred to as fuse space. At boot time, the chip retrieves the manufacturer's public key from the fuse space and uses it to authenticate the firmware. This prevents replacement or modification of the firmware by anyone other than the manufacturer of the chip.

When the manufacturer or another current owner sells a device or chip to a third party (referred to as a new owner), the new owner may wish to establish ownership of the device or chip such that only the new owner can use the device or chip, and/or modify and/or replace the firmware. To accomplish this, the device or chip may use a public key provided by the new owner, instead of the public key provided by the previous owner, to authenticate firmware signed by a private key associated with the new owner, which is required to boot the device or chip. However, some chips and devices store fuse keys in the fuse space, which has only a finite amount of space, and cannot be reused.

Signatures, like those used to sign and authenticate firmware, may be used to sign and authenticate software to be performed by a device or chip. In such cases, the device or chip may use the public key provided by the new owner to authenticate software signed by a private key. In some embodiments, software to be performed by the device or chip may require neither authentication nor signature. In some embodiments, software to be performed may be signed as described with respect to boot firmware, wherein the same keys used to sign and authenticate firmware are used to sign and authenticate the software.

Instead of storing a new fuse key in the fuse space, the owner may store the owner 's public key in a data object (such as a Binary Large Object (blob)) in memory that is external to the device or chip, cryptographically bind that blob to the device or chip, and use a bit field or bit array stored in the fuse space to indicate whether the device or chip is owned (referred to as locked) or unowned (referred to as unlocked). If the device or chip is owned, at boot time, the device or chip will obtain the fuse key from the external memory and use the fuse key to authenticate the firmware. This method of authentication allows ownership transfers that consume a smaller amount of the fuse space than would be required by writing new fuse keys to fuse space. Thus, a larger number of ownership transfers may be available. Further, by using external memory to store the data object (e.g., blob), the method may be used by devices and/or chips that do not include sufficient non-volatile memory (e.g., flash memory) to store an updatable Root of Trust key.

The device or chip may bind the data object (e.g., the blob) to the device or chip by using a fuse state stored in the fuse space, and/or device information to generate a Message Authentication Code (MAC), which may be incorporated into the data object (e.g., a DOT blob). This MAC may be compared against a subsequent MAC determined based on at least a portion of the data object, at least a portion of the fuse state, and at least a portion of the device information. The data object may be authenticated if the original MAC matches the subsequent MAC. A public lock authentication key (LAK) may be retrieved from the authenticated data object and used to authenticate commands. A public code authentication key (CAK) may be retrieved from the authenticated data object and used to authenticate firmware.

In some embodiments, if the device or chip is sold to a new owner, the owner may claim ownership via provision of a claim of ownership command issued to the device or chip, and signed using a private LAK that corresponds to the public LAK. In response to the claim of ownership command, the device or chip retrieves the public LAK, and uses public LAK to authenticate the claim of ownership command.

The claim of ownership command may cause the device or chip to create the data object (e.g., the blob), storing at least one key (e.g., the public CAK and/or the public LAK). The data object is bound to the device or chip by a MAC, which may be unique to the device due to derivation from the device identifier and fuse state. The data object is stored in a memory location (e.g., an unsecured memory location) external to the device or chip. The data object may be bound cryptographically to a device unique key created by the manufacturer and stored on the device or chip. Thus, when the device or chip boots, it may use the device unique key to obtain the public CAK and/or the public LAK. The device unique key may be used as a symmetric key that allows for generation of a MAC to authenticate the data object (e.g., blob) and its contained keys. Commands sent by the owner to the device or chip may be signed using one or more keys (e.g., private keys) and the device or chip may use one or more corresponding keys (e.g., public keys) to authenticate such commands.

In addition to creating and storing the data object (e.g., the blob), the device or chip may track whether it is currently owned (referred to as locked) or unowned (referred to as unlocked). The chip may use the fuse space as a series of bits that indicates ownership status. Initially, before the chip is owned, zero bits in the series of bits may be set. When ownership is claimed, a first unset bit may be set (e.g., a number of set bits progresses to an odd integer), and subsequent bits in the series of bits may be set to indicate subsequent ownership transfers ensuring that each transfer is associated with a unique integer number of set bits and secure by allowing each integer value to correspond to a different ownership. If the device or chip is owned, the number of set bits may correspond to a unique odd integer.

A chip may start in an uninitialized state, with no triggered fuses indicating zero set bits (e.g., even, or unowned). One or more processors may send a CAK install command (e.g., DOT_CAK_INSTALL) to the chip, and/or the chip may begin initialization automatically when the chip boots up in the uninitialized state. During initialization (e.g., CAK install), the chip may boot without ownership information. The chip may then store ownership information in RAM of the chip (e.g., one or more locked scratch registers that persist through L1 reset), and perform an L1 reset (e.g., a reset of the chip components used for ownership transfer, but not the whole chip). This ownership information may include information to be used to create a DOT blob, which is a data structure containing the public keys, such as the public CAK, the public LAK, and/or other data, such as data required for future changes of state.

Now in a volatile state, the chip may be presented with a DOT lock command (e.g., DOT_LOCK), claiming ownership of the chip. During this transition, the DOT lock command may be signed with a private LAK corresponding to the public LAK (e.g., a chip-specific cryptographic LAK pair). The public LAK is part of the keys within the DOT blob, and is used to ensure the command is issued by someone with access to the LAK components. The chip may then generate, add authenticity and store a new unique DOT blob in memory external to the chip (e.g., differentiated because of the new fuse array state, from which the DOT blob is derived). The DOT blob may be returned to the caller of the commands, and may be used to recover the chip in the event of corruption or failure of the DOT blob. The DOT blob may contain or be transmitted with owner-specific information, such as keys (e.g., the public CAK and/or the public LAK), to be kept separately from the chip to allow commands to be issued to the chip. Without this new blob, the vendor may be required to assist with recovery. The DOT lock command may then progress the fuse state by one, going from even to odd and indicating ownership is claimed.

Now in a locked state, the chip may be presented with a CAK rotate command (e.g., DOT_CAK_ROTATE), cycling the public CAK to a new key without issuing a fuse state change. This means the old DOT blob is still usable in this state, but allows for generation of a new public CAK as well as a new blob that includes the new public CAK. The CAK rotate command may be signed with the private LAK (e.g., the private key corresponding to the public LAK). The chip may also be presented with a DOT unlock command (e.g., DOT_UNLOCK), signed with the private LAK (e.g., the private key corresponding to the public LAK), which transitions back to the volatile or uninitialized states. This may increment the fuse state by 1, going from odd to even (claimed to unclaimed), allowing new ownership to be claimed and invalidating previously generated DOT blobs, preventing usage of any public keys stored therein.

When uninitialized, the DOT disable command (e.g., DOT_DISABLE), signed with information related to the LAK (e.g., the private key corresponding to the LAK), may be used to disable DOT entirely. The DOT disable command may cause the chip to generate a DOT blob (that may include the public LAK but not the public CAK) and may be returned to the issuer of the DOT disable command. The DOT disable command involves progression of the fuse state from even to odd (unowned to owned). In this disabled state, DOT cannot be performed until a DOT enable command (e.g., DOT_ENABLE) signed with information related to the LAK (e.g., the private key corresponding to the LAK), is provided to transition the chip back to an uninitialized state and progress the fuse state from odd to even (owned to unowned).

If at any time the current DOT is lost or otherwise unavailable or corrupted, the chip may be considered in a corrupted state. In this state, a DOT override command (e.g., DOT_OVERRIDE) may be issued, signed with the vendor key, to increment fuse state from odd back to even (owned to unowned), resetting the ownership state of the chip entirely.

By using the above described method, device ownership may be maintainable through power-cycling, without excessive hardwiring of ownership keys. In the event of a power cycle, the device or chip may read the DOT blob, based at least in part on the current fuse state, allowing the device or chip to determine if ownership is currently claimed and verify the DOT blob has not been tampered with. Since the DOT blob can be verified, the ownership keys, which are part of the DOT blob, can be stored separately from the device or chip to which the DOT blob is bound, and the DOT blob can be verified, allowing ownership to persist through loss of power.

In the preceding and following description, numerous specific details are set forth to provide a more thorough understanding of at least one embodiment. However, it will be apparent to one skilled in the art that the inventive concepts may be practiced without one or more of these specific details.

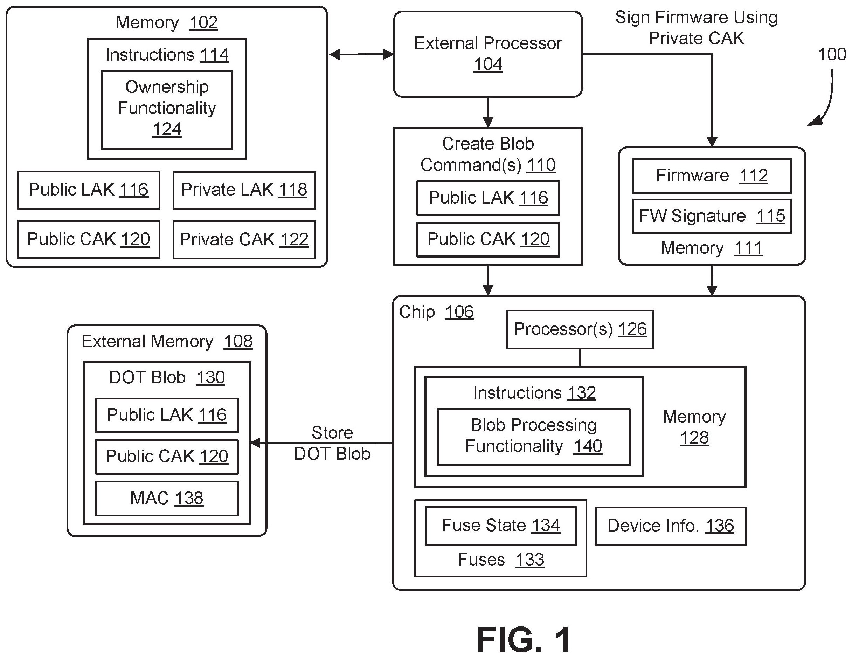

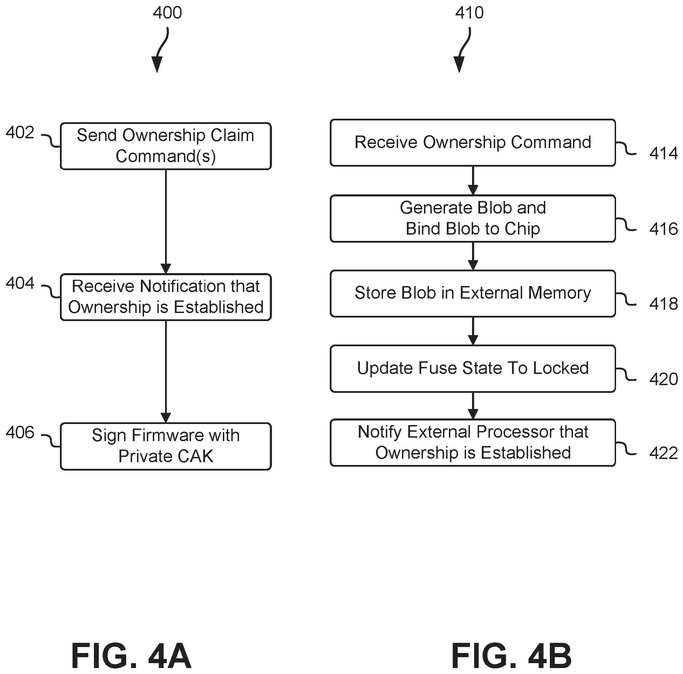

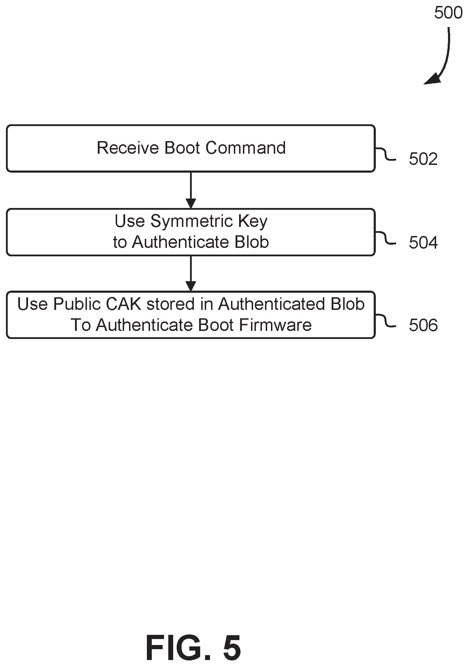

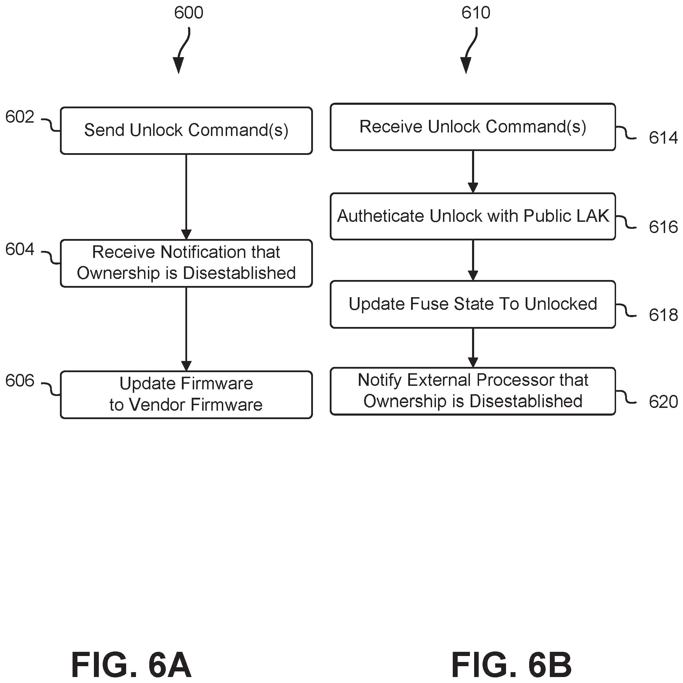

With reference to FIG. 1, FIG. 1 illustrates a block diagram depicting an example system 100, in accordance with at least one embodiment. The system 100 may include memory 102, the external processor(s) 104, the chip 106, external memory 108, memory 111, and/or one or more other hardware components. In at least one embodiment, the memory 102 and the external processor(s) 104 are external with respect to the chip 106. The external processor(s) 104 is/are depicted in FIG. 1 claiming ownership of the chip 106. The system 100 may implement a computing system, an autonomous machine, a semi-autonomous machine, a networked device, a control system, a mobile device, a distributed system, a smart grid component, a medical device, a financial transaction system, and/or any other system, machine, or otherwise that may require or other benefit from secure ownership. The system 100 and/or components therein may perform at least a portion of one or more processes, such as a process 400 (see FIG. 4), a process 500 (see FIG. 5), and/or a process 600 (see FIG. 6).

The memory 102 may be one or more shared and/or separate memory devices used by one or more of the external processor(s) 104 to store information indicating procedures and/or processes to be used to request ownership alteration of the associated chip 106. In some embodiments, the memory 102 (e.g., one or more non-transitory processor-readable medium) may store processor executable instructions 114, a LAK cryptographic pair (e.g., public LAK 116 and private LAK 118), and/or a CAK cryptographic pair (e.g., public CAK 120 and private CAK 122). In some embodiments, the instructions 114 when executed by one or more processors (e.g., the external processor(s) 104) may implement ownership functionality 124, and/or other functionality. In some embodiments, the instructions 114 when executed by one or more processors (e.g., the external processor(s) 104) may generate create blob command(s) 110 that may include the public LAK 116 and/or the public CAK 120, and send the create blob command(s) 110 to the chip 106. The memory 102 may provide the instructions 114, the LAK cryptographic pair (e.g., the public LAK 116 and private LAK 118), and/or the CAK cryptographic pair (e.g., the public CAK 120 and private CAK 122) to the external processor(s) 104 to allow the external processor(s) 104 to sign the firmware 112 and/or generate chip commands, such as the create blob command(s) 110 (in which the chip 106 is commanded by the external processor(s) 104 to generate a Device Ownership Transfer (DOT) blob 130 and/or corresponding information). The memory 102 may be, wholly or in part, shared with and/or accessible by both the external processor(s) 104 and the chip 106. For example, one or more components stored within the memory 102 (e.g., the private LAK 118 and/or the private CAK 122) may remain inaccessible to the external processor(s) 104 and/or the chip 106. The external processor(s) 104 may be able to use the private LAK 118 and/or the private CAK 122 to perform one or more certain operations but may not have direct access to the private LAK 118 and/or the private CAK 122 through the memory 102 being shared. The memory 102 may include external memory 108, and/or *vice versa.* In some embodiments, the memory 102 may contain additional data indications.

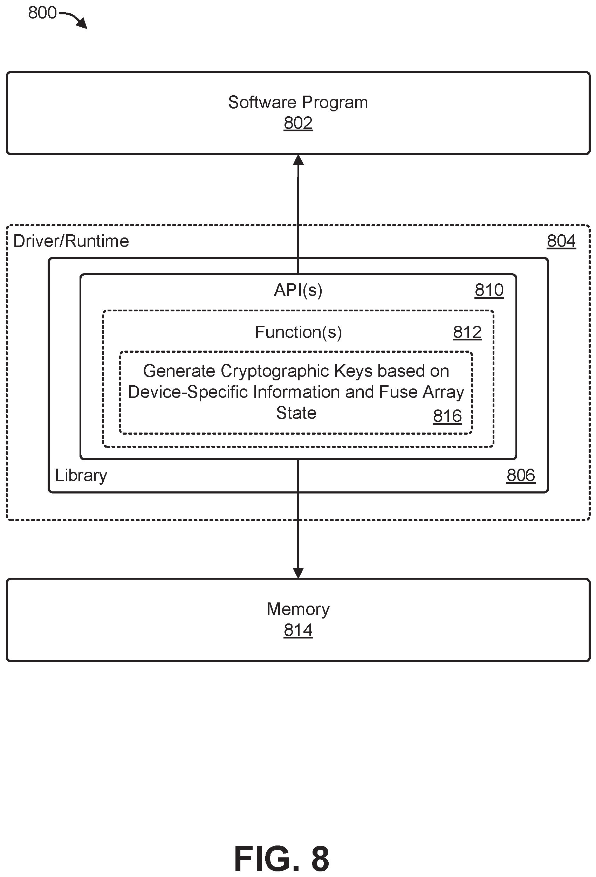

By way of additional non-limiting examples, the memory 102 (e.g., one or more non-transitory machine-readable medium) may be implemented, for example, using volatile memory (e.g., dynamic random-access memory ("DRAM")) and/or nonvolatile memory (e.g., a hard drive, a solid-state device ("SSD"), and/or the like). In at least one embodiment, at least a portion of the memory 102 is implemented using at least a portion of any system(s) depicted in and/or described with respect to FIGS. 8-12. In at least one embodiment, at least a portion of the memory 102 is used to implement at least a portion of any system(s) depicted in and/or described with respect to FIGS. 8-12.

The ownership functionality 124 may include one or more operational instructions for generation of one or more symmetric cryptographic keys (e.g., public LAK 116, private LAK 118, public CAK 120, private CAK 122, and/or any other required cryptographic key), generation of firmware signatures, command formatting and requirements to issue commands to the chip 106, and/or any other functionality required to transition ownership, issue one or more commands (e.g., to the chip 106), provision firmware, and/or any other process to manipulate the state of the chip 106. In some embodiments, the ownership functionality 124 may include one or more instances of a DOT blob (e.g., the DOT blob 130) and/or any information included therein. In some embodiments, the ownership functionality 124 may include one or more indications of the state of the chip 106 and/or operations to be performed to alter that state.

The processor(s) 104 may include one or more circuits that perform at least a portion of the instructions 114 stored in the memory 102. The processor(s) 104 may include one or more parallel processing units ("PPU(s)"), such as one or more graphics processing units ("GPU(s)"), one or more massively parallel GPU(s), and/or the like. In at least one embodiment, massively parallel GPU(s) refer to a collection of one or more GPUs, or any suitable processing units, which may be utilized to perform various processes in parallel. The processor(s) 104 may be implemented, for example, using a main central processing unit ("CPU") complex, one or more microprocessors, one or more microcontrollers, the PPU(s) (e.g., GPU(s)), one or more data processing units ("DPU(s)"), one or more arithmetic logic units ("ALU(s)"), and/or the like. The external processor(s) 104 may include one or more external processors, such as one or more GPUs, one or more CPUs, one or more general-purpose graphics processing units (GPGPUs) that may each be a GPU capable of performing general-purpose computing tasks, one or more PPUs, and/or one or more other types of processor that may be used to issue commands to the chip 106. In at least one embodiment, at least a portion of the processor(s) 104 is implemented using at least a portion of any system(s) depicted in and/or described with respect to FIGS. 8-12. In at least one embodiment, at least a portion of the processor(s) 104 is used to implement at least a portion of any system(s) depicted in and/or described with respect to FIGS. 8-12.

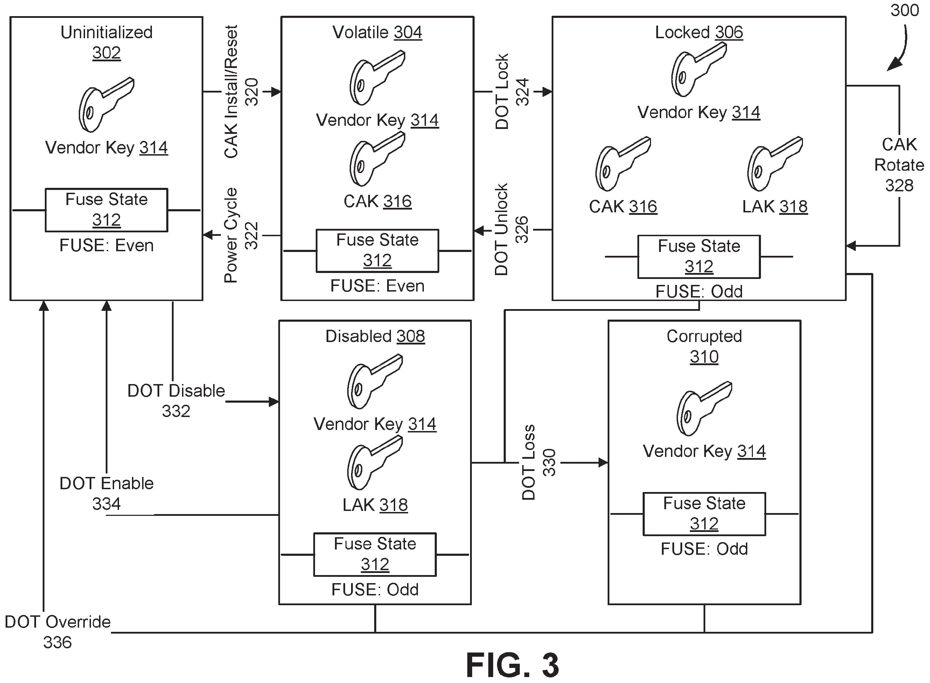

The firmware 112 may be stored in the memory 111. In some embodiments, the external processor(s) 104 may sign the firmware 112 using the private CAK 144. For example, the external processor(s) 104 may generate a digital firmware signature 115 by applying a cryptographic function (e.g., Rivest-Shamir-Adleman (RSA) cryptographic algorithm, Digital Signature Algorithm (DSA), Elliptic Curve Digital Signature Algorithm (ECDSA), Edwards-curve Digital Signature Algorithm (EdDSA), and/or others) to at least a portion of the private CAK 144 and at least a portion of the firmware 112. The firmware signature 115 may be stored by the memory 111, and may be separate from or at least partially embedded in the firmware 112 (e.g., stored in the memory 111). The chip 106 may use the public CAK 120 to authenticate the firmware 112 (e.g., to ensure the firmware 112 is authorized to be performed on the chip 106) and/or to otherwise verify signatures generated using the private CAK 122. The private CAK 122 is used by the external processor(s) 104 to generate a digital signature for the firmware 112, which can then be verified by any device, such as the chip 106, using the corresponding public CAK 120. In some embodiments, the external processor(s) 104 may issue commands directly to the chip 106, such as the create blob command(s) 110. The create blob command(s) 110 (e.g., issued by the external processor(s) 104) command the chip 106 to generate the DOT blob 130. In some embodiments, a create blob command is issued as part of a process to claim ownership of the chip 106 (e.g., the process 400, FIG. 4). In some embodiments, the create blob command(s) 110 include(s) one or more indications of the public LAK 116 and/or the public CAK 120, which the chip 106 may use to ensure authorization to perform one or more of the ownership claiming processes. In some embodiments, the external processor(s) 104 may issue other commands to the chip 106, such as one or more unlock ownership commands (e.g., process 600, FIG. 6), one or more lock disable commands (e.g., associated with the DOT disable operation 332, FIG. 3), one or more CAK rotate commands (e.g., associated with the CAK rotate operation 328, FIG. 3), and/or one or more other commands that may be used to establish ownership control of the chip 106. In some embodiments, the external processor(s) 104 may perform other functionality in parallel with control functionality of the chip 106.

The chip 106 may be implemented using one or more hardware chips (e.g., integrated circuit and/or any other designation or type of hardware chip) used to perform instructions to process data, store information, control one or more devices, and/or perform any other function(s). By way of non-limiting examples, the chip 106 may be implemented as a silicon chip, such as a processor, a microprocessor, a CPU, a GPU, RAM, Flash Memory, a microcontroller, a Digital Signal Processor (DSP), an Application-Specific Integrated Circuit (ASIC), a Field-Programmable Gate Array (FPGA), a Network Interface Controllers (NIC), a power management integrated circuit, an operational amplifier, an Analog-to-Digital Converters (ADC), a Digital-to-Analog Converter (DAC), a Security Chips, a System on a Chip (SoC), and/or others. In some embodiments, the chip 106 may perform part or all of ownership transfer processes, such as processes 400, 410, 500, 600, and/or 610 of FIGS. 4A, 4B, 5, 6A, and/or 6B. The chip 106 may include processor(s) 126, memory 128, a plurality of fuses 133 storing a fuse state 134, device information 136, and/or one or more other components. The processor(s) 126 may be implemented using a CPU complex, one or more microprocessors, one or more microcontrollers, PPU(s) (e.g., GPU(s)), DPU(s), ALU(s), and/or the like. By way of non-limiting examples, the processor(s) 126 may be implemented using any device(s) suitable for implementing the external processor(s) 104.

The memory 128 may be implemented, for example, using volatile memory (e.g., DRAM) and/or nonvolatile memory (e.g., a hard drive, an SSD, and/or the like). By way of non-limiting examples, the memory 128 may be implemented using any device(s) suitable for implementing the memory 102. The memory 128 (e.g., one or more non-transitory processor-readable medium) may store processor executable instructions 132. The DOT blob 130 may include the public LAK 116, the public CAK 120, and/or a MAC 138. In some embodiments, the instructions 132 when executed by the processor(s) 126 may implement blob processing functionality 140. The blob processing functionality 140 may generate a DOT blob 130 and store the DOT blob 130 in the external memory 108. In some embodiments, the memory 128 may be used to generate the DOT blob 130 and may temporality store at least a portion of the DOT blob 130 and its contained information. In some embodiments, the memory 128 store the instructions 132 and contain information, and/or any other data required for operation of the chip 106 and/or the processor(s) 126.

The fuses 133 storing the fuse state 134 may each be implemented as one or more programmable elements that may be permanently altered (e.g., by one or more commands issued by the processor(s) 104) to store a specific value. For example, the fuses 133 may be implemented as OTP fuses. Once a fuse is programmed (also referred to as blown), the fuse changes its state permanently, which may be stored as a binary value (e.g., 0 or 1). By way of non-limiting examples, the fuses 133 of the chip 106 may be implemented using one or more polyfuses (e.g., that may each be constructed of polysilicon and blown by applying a high voltage, which changes the resistance of the polyfuse permanently), one or more metal fuses (e.g., that may each be constructed of metal layers and blown by applying a high current, physically breaking a metal connection), one or more antifuses (e.g., that start out as nonconductive and become conductive when programmed), one or more EEPROM/Flash Memory Cells (e.g., electrically programmed to store a permanent value), and/or one or more other devices. In some embodiments, the single-use fuses 133 storing the fuse state 134 are arranged in a fuse field or a fuse array (e.g., in which an odd number of triggered fuses may indicate an owned state, and an even number of triggered fuses may indicate an unowned state).

The device information 136 may include built-in chip information, such as a chip identifier. For example, the device information 136 may include a device unique key created by the manufacturer (e.g., RTL key or FUSE key ) and stored by the chip 106. By way of another non-limiting example, the device information 136 may include one or more physically unclonable function (PUF) keys. The device information 136 may include information that is unique per device (e.g., unique to the silicon of the device).

The blob processing functionality 140 may cause the processor(s) 126 to use the device information 136 to bind the DOT blob 130 to the chip 106 to enable authentication of ownership. For example, the blob processing functionality 140 may cause the processor(s) 126 to use the device information 136 to function as a symmetric key that the blob processing functionality 140 uses to create a message authentication code (MAC) 138 by applying a cryptographic function (e.g., HMAC, CMAC, and/or others) to at least a portion of the DOT blob 130 and at least a portion of the device information 136. The cryptographic function may be applied to values other than or in addition to at least a portion of the DOT blob 130 and at least a portion of the device information 136, such as to the fuse state 134. For example, the device information 136 and the fuse state 134 may be combined to define a symmetric key that the blob processing functionality 140 may use to create the MAC 138 by applying a cryptographic function (e.g., RSA cryptographic algorithm, DSA, ECDSA, EdDSA, and/or others) to at least a portion of the DOT blob 130 and at least a portion of the symmetric key.

The blob processing functionality 140 may cause the processor(s) 126 to store the MAC 138 in the external memory 108, for example, as part of the DOT blob 130. The blob processing functionality 140 may cause the processor(s) 126 to verify the MAC 138 using at least a portion of the device information 136 (e.g., using a process referred to as MAC-verification) to ensure that the DOT blob 130 is authentic and bound to the chip 106. The blob processing functionality 140 may cause the processor(s) 126 to verify the MAC 138 by generating a new MAC (e.g., using the cryptographic function) for at least a portion of the DOT blob 130 and at least a portion of the device information 136, and comparing this new MAC to the original MAC 138 generated for the DOT blob 130. If the new MAC and the original MAC 138 match, the blob processing functionality 140 may cause the processor(s) 126 to determine the DOT blob 130 is authentic, and the blob processing functionality 140 may cause the processor(s) 126 to determine that the DOT blob 130 is not authentic if the new MAC and the original MAC 138 do not match. For example, when the chip 106 boots, the blob processing functionality 140 may cause the processor(s) 126 to use the device information 136 (e.g., the device unique key) to authenticate the DOT blob 130, and obtain the public CAK 120 and/or the public LAK 116 from the authenticated DOT blob 130. Then, the blob processing functionality 140 may cause the processor(s) 126 to use the public CAK 120 to authenticate the firmware 112. The blob processing functionality 140 may cause the processor(s) 126 to use at least a portion of the device information 136 (e.g., the device unique key created by the manufacturer) as the symmetric key that creates the MAC 138 (that binds the DOT blob 130 to the chip 106) and verifies the DOT blob 130 to obtain the public CAK 120 and/or the public LAK 116. The processor(s) 104 may send (e.g., as a result of performing the ownership functionality 124) one or more commands to the chip 106 that are signed using one or more keys (e.g., private and/or public keys), and the blob processing functionality 140 may cause the processor(s) 126 to use one or more corresponding keys (e.g., public keys) to authenticate such commands.

The blob processing functionality 140 may cause the processor(s) 126 to use the fuse state 134 and/or the device information 136 to generate the DOT blob 130, the MAC 138, and/or any other component(s) to be used by the blob processing functionality 140 to bind the DOT blob 130 to the chip 106, and/or authenticate the bound DOT blob 130 using a cryptographic indication of ownership (e.g., the MAC 138). The blob processing functionality 140 may cause the processor(s) 126 to verify the firmware 112 using the public CAK 120 and/or the public LAK 116 included in the DOT blob 130. The blob processing functionality 140 may cause the processor(s) 126 to perform one or more commands, such as the create blob command(s) 110, sent to the chip 106 by the external processor(s) 104.

The external memory 108 may include one or more memory locations where the chip 106 is indicated to provide the DOT blob 130, for example, in response to the create blob command(s) 110. The external memory 108 may be a component of the memory 102, or *vice versa.* The external memory 108 may be implemented, for example, using volatile memory (e.g., DRAM) and/or nonvolatile memory (e.g., a hard drive, a SSD, and/or the like). By way of non-limiting examples, the external memory 108 may be implemented using any device(s) suitable for implementing the memory 102. The external memory 108 (e.g., one or more non-transitory processor-readable medium) may store the DOT blob 130, which may include the public LAK 116, the public CAK 120, and/or a MAC 138.

The memory 111 may include one or more memory locations where the firmware 112 is stored, along with the firmware signature 115 (which may be separate from or embedded in the firmware 112) generated using the private CAK 122. The memory 111 may be a component of the memory 102 and/or the external memory 108. The memory 102 and/or the external memory 108 may be a component of the memory 111. The memory 111 may be implemented, for example, using volatile memory (e.g., DRAM) and/or nonvolatile memory (e.g., a hard drive, an SSD, and/or the like). By way of non-limiting examples, the memory 111 may be implemented using any device(s) suitable for implementing the memory 102.

The fuse state 134 may be one or more indications of an integer indicated by one or more arrays of single-use fuses (e.g., the fuses 133). In at least one embodiment, the fuses 133 may each correspond to a single bit that may be blown. The number of blown fuses may be counted, and the results of the count may be either an odd or even integer. One of odd or even integers may be designated as locked (or owned), and the other of odd or even integers may be designated as unlocked (or free). For ease of illustration, odd integers will be described as indicating the chip 106 is owned, and even integers will be described as indicating the chip 106 is free (or unowned). However, in alternate embodiments, even integers may indicate the chip 106 is owned, and odd integers may indicate the chip 106 is free (or unowned).

The blown fuses may be used to indicate an odd integer, indicating ownership of the chip 106 is claimed, or an even integer, indicating ownership of the chip 106 is not claimed. The fuse state 134 may include the count of blown fuses. The fuse state 134 may be modified by the instructions 132 that may cause the processor(s) 126 to progress to a next integer by blowing a next one of the fuses 133, such as progression from 3 triggered (or blown) fuses to 4 trigger fuses. In some embodiments, the fuse state 134 cannot be rolled back, meaning, for example, the fuse state 134 cannot be regressed from 4 triggered fuses to 3 triggered fuses.

In some embodiments, the blob processing functionality 140 may cause the processor(s) 126 to use the public LAK 116 to algorithmically verify one or more signatures (generated using an associated private component, such as private LAK 118) provided along with one or more commands (e.g., create blob command(s) 110) and/or the firmware 112. In some embodiments, public components, such as the public LAK 116, may be generated by one or more algorithms performed using the corresponding private component, such as the private LAK 118. In at least one embodiment, one or more second processors (e.g., the processor(s) 126) can verify the private component was used to sign the firmware 112 using the corresponding public component, allowing signing of the firmware 112 and/or commands (e.g., the create blob command(s) 110) by one requesting device (e.g., the processor(s) 104), and verification by a performing device (e.g., the chip 106) that the requesting device has proven ownership control. In some embodiments, the LAK cryptographic pair includes asymmetric cryptographic keys used to ensure locking, unlocking, and/or disabling of locking is secured. In some embodiments, the CAK cryptographic pair includes asymmetric cryptographic keys used to ensure code is authorized to be performed on the associated device (e.g., the chip 106).

In some embodiments, the system 100 includes one or more processors to, during a boot process, use a value permanently written to a circuit component connected to one or more circuits of the one or more processors to authenticate at least a key stored externally to the one or more processors and/or use the key to authenticate at least one of a command, firmware, or software before completing the boot process, and/or otherwise perform operations described herein. In some embodiments, the system 100 is, is included in, and/or otherwise includes systems illustrated in and/or described with respect to at least one of FIGS. 1-12 to, during a boot process, use a value permanently written to a circuit component connected to one or more circuits of a processor to authenticate at least a key stored externally to the processor and/or use the key to authenticate at least one of a command, firmware, or software before completing the boot process, and/or otherwise perform operations described herein. In some embodiments, the system 100 performs one or more processes illustrated in and/or described with respect to one or more of FIGS. 1-12, such as to, during a boot process, use a value permanently written to a circuit component connected to one or more circuits of a processor to authenticate at least a key stored externally to the processor and/or use the key to authenticate at least one of a command, firmware, or software before completing the boot process, and/or otherwise perform operations described herein.

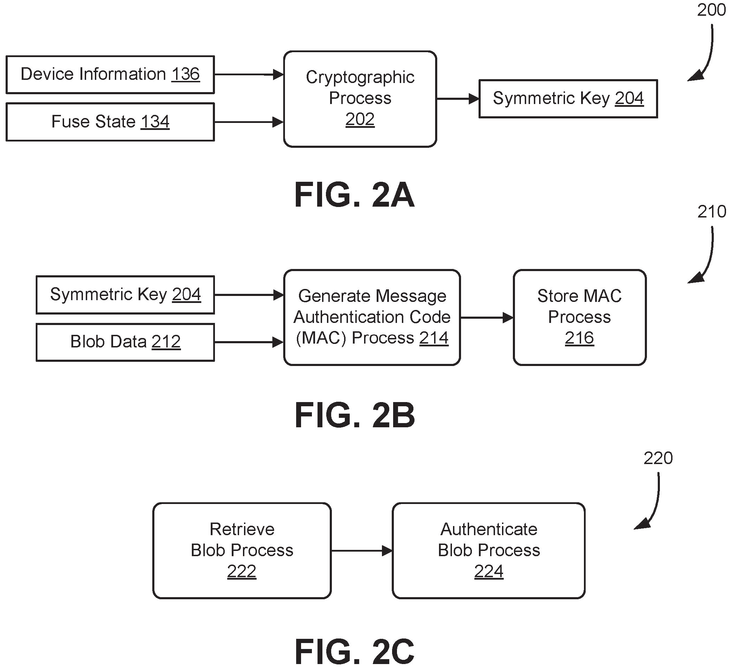

In reference to FIG. 2A, FIG. 2A illustrates an example process 200 that includes deriving a cryptographic symmetric key 204 used to bind the DOT blob 130 (see FIG. 1) to the chip 106 (see FIG. 1), in accordance with at least one embodiment. The process 200 includes obtaining the device information 136 and the fuse state 134 as input, and providing that input to a cryptographic process 202 that outputs the symmetric key 204.

The cryptographic process 202 may be a component of the blob processing functionality 140 (see FIG. 1), and generates the symmetric key 204 from the fuse state 134 and/or the device information 136. For example, the blob processing functionality 140 may obtain the fuse state 134 and/or the device information 136, which may be stored in the fuses 133 and/or one or more other hardware structures of the chip 106, and provide the fuse state 134 and/or the device information 136 to the cryptographic process 202. The cryptographic process 202 may be performed by one or more processors (e.g., the processor(s) 126) and may use one or more algorithms to generate one or more symmetric keys (e.g., the symmetric key 204). Because the fuse state 134 and/or the device information 136 are stored by the chip 106, the process 200 links the chip 106 with the output symmetric key 204, and generating the symmetric key 204 requires both of these inputs. Further, the output symmetric key 204 is identical to subsequent symmetric keys output by the cryptographic process 202 at a later time with the same inputs, but differing if either input is altered.

The symmetric key 204 may be implemented as one or more cryptographic keys that can be algorithmically determined by the cryptographic process 202, and used to generate a MAC (e.g., the MAC 138), wherein the same symmetric key is used to both generate and authenticate the MAC. The cryptographic process 202 may be implemented using any process(es) suitable for deriving one or more symmetric keys (e.g., the symmetric key 204) from one or more input values, such as the fuse state 134 and/or the device information 136. For example, a Key Derivation Function (KDF), Diffie-Hellman Key Exchange, Elliptic Curve Cryptography (ECC), and/or one or more other methods may be used to obtain the symmetric key 204 based at least in part upon the fuse state 134 and the device information 136.

While the process 200 uses the cryptographic process 202 to obtain the symmetric key 204, other non-cryptographic processes may used. For example, the symmetric key 204 may be obtained by concatenating or otherwise combining (e.g., using a bit-wise XOR operation) the fuse state 134 and the device information 136.

In reference to FIG. 2B, FIG. 2B illustrates an example process 210 that includes deriving a MAC to authenticate other cryptographic keys, in accordance with at least one embodiment. The process 210 includes obtaining the symmetric key 204 (e.g., generated by the process 200 illustrated in FIG. 2A) and blob data 212 (e.g., the DOT blob 130) as input, providing this input to a generate MAC process 214 that outputs a MAC (e.g., the MAC 138). The process 210 may include providing the MAC output by the generate MAC process 214 to a store MAC process 216 that stores the MAC in or along with the blob data 212 (e.g., as the DOT blob 130 in the external memory 108 illustrated in FIG. 1).

The blob data 212 may be associated with and/or may be component of the DOT blob 130 (see FIG. 1). The blob data 212 may include one or more indications of chip state information (e.g., the fuse state 134, FIG. 1), public key components (e.g., the public LAK 116 and/or the public CAK 120), flags, metadata, and/or signatures of integrity and/or authenticity. In some embodiments, the blob data 212 may be input to one or more processes of the generate MAC process 214.

The generate MAC process 214 may include one or more procedural steps that generate a MAC, such as MAC 138 of FIG. 1. Returning to FIG. 2B, the generate MAC process 214 may include or perform one or more algorithms that generate the MAC. Generation of the MAC may involve one or more MAC generation algorithms to combine the symmetric key 204 with the blob data 212 to produce the MAC (e.g., a secure hash). The generate MAC process 214 may be implemented using any process(es) suitable for generating the MAC, such as Poly1305, methods that use cryptographic hash function (such as SHA-256), like Hash-based Message Authentication Code (HMAC), methods that use a block cipher (such as AES), like Cipher-based Message Authentication Code (CMAC), methods based on the CBC mode of block ciphers, like Cipher Block Chaining Message Authentication Code (CBC-MAC), and/or others.

The store MAC process 216 may include one or more procedural steps to incorporate a generated MAC into the blob data 212, and store the modified blob data as one or more DOT blobs (e.g., the DOT blob 130, FIG. 1) in external memory (e.g., the external memory 108). The store MAC process 216 may include one or more algorithmic steps used to store the MAC in the blob data 212, and store the modified blob data as one or more DOT blobs (e.g., the DOT blob 130), ensuring devices that claim ownership of a related chip can indicate that ownership.

In reference to FIG. 2C, FIG. 2C illustrates an example process 220 that includes authenticating a blob (e.g., the DOT blob 130 illustrated in FIG. 1), in accordance with at least one embodiment. The process 220 may include a retrieve blob process 222 that retrieves a blob (e.g., the DOT blob 130) from external memory (e.g., the external memory 108), and/or an authenticate blob process 224 that uses the symmetric key 204 (see FIGS. 2A and 2B) to authenticate the blob.

The retrieve blob process 222 may include one or more procedural steps wherein one or more processors (e.g., the processor(s) 126) and/or secure chips (e.g., the chip 106) retrieves the stored blob (e.g., the DOT blob 130, FIG. 1). In some embodiments, such steps may allow a chip (e.g., the chip 106, FIG. 1) to authenticate the blob, which may be stored in external and/or unsecure memory.

The authenticate blob process 224 may include one or more procedural steps that authenticate a blob as not having been manipulated, altered, tampered with, and/or out of date. To do so, one or more processors (e.g., the processor(s) 126) may perform the process 200 to generate the symmetric key 204, the generate MAC process 214 (see FIG. 2B) using the symmetric key 204 and at least a portion of the blob (e.g., blog data), to generate a new MAC, and may compare the stored MAC (e.g., stored by the store MAC process 216) to the new MAC. The processors (e.g., the processor(s) 126) may perform the comparison by using one or more cryptographic comparison algorithms. If the processors (e.g., the processor(s) 126) determine the comparison indicates the stored MAC and the new MAC match, the processors (e.g., the processor(s) 126) authenticate the blob. On the other hand, if the processors (e.g., the processor(s) 126) determine the comparison indicates the stored MAC and the new MAC do not match, the processors (e.g., the processor(s) 126) do not authenticate the blob. If the blob is authenticated, this verification or authentication guarantees that the blob is not altered and can be used, wholly or in part, in other processes, such as issuing commands and/or authenticating firmware (e.g., the firmware 112). For example, the public CAK 120 may be used to authenticate the firmware signature 115 and the associated firmware 112. By way of another non-limiting example, the public LAK 116 may be used to authenticate the commands, such as the create blob command(s) 110.

In some embodiments, the processes 200, 210, and 220 may be used by one or more processors to, during a boot process, use a value permanently written to a circuit component connected to one or more circuits of the one or more processors to authenticate at least a key stored externally to the one or more processors and/or use the key to authenticate at least one of a command, firmware, or software before completing the boot process, and/or otherwise perform operations described herein. In some embodiments, one or more processes illustrated in and/or described with respect to at least one of FIGS. 1-12 include one or more of the processes 200, 210, or 220, such as to, during a boot process, use a value permanently written to a circuit component connected to one or more circuits of a processor to authenticate at least a key stored externally to the processor and/or use the key to authenticate at least one of a command, firmware, or software before completing the boot process, and/or otherwise perform operations described herein.

In reference to FIG. 3, FIG. 3 illustrates an example of a system 300 that transitions between chip states, and processes and/or keys required and/or available at each state, in accordance with at least one embodiment. FIG. 3 illustrates five example states that a device or chip might exhibit: an uninitialized state 302, a volatile state 304, a locked state 306, a disabled state 308, and a corrupted state 310. However, in some embodiments, one or more of these states may be omitted and/or one or more other states included.

When the device or chip is in the uninitialized state 302, the device or chip has not yet been claimed and does not yet have an owner. Further, the device or chip has not yet received or obtained a verified public CAK 316, or a verified public LAK 318, for example, from the external processor(s) 104 or another device. While in the uninitialized state 302, the device or chip may perform a CAK install/reset operation 320, and/or a DOT disable operation 332.

The CAK install/reset operation 320 transitions the device or chip from the uninitialized state 302 to the volatile state 304. The external processor(s) 104 (e.g., operated by an owner) may send a CAK install/reset command (e.g., DOT_CAK_INSTALL) to the device or chip to cause it to perform the CAK install/reset operation 320. The device or chip may receive a new public CAK 316 (referred to as the verified public CAK) from the external processor(s) 104 (e.g., in the CAK install/reset command) or via another method. The CAK install/reset operation 320 may involve one or more steps to install the public CAK 316 in RAM that is part of or accessible by the device or chip. The CAK install/reset operation 320 may involve one or more steps to boot the device or chip without ownership information, issue an internal command to install the public CAK 316, install ownership information into the ownership RAM (e.g., a locked scratch register that persists through L1 resets), perform an L1 reset, and/or measure and commit the public CAK 316 to be used for authentication to the Root of Trust Security (RTS) so it can be attested. In some embodiments, one or more additional steps may be required at any time during the process, and/or described steps may not be required.

The DOT disable operation 332 transitions the device or chip to the disabled state 308 from the uninitialized state 302 or the volatile state 304. The external processor(s) 104 (e.g., operated by an owner) may send a DOT disable command (e.g., DOT_DISABLE) to the device or chip to cause it to perform the DOT disable operation 332, which may disable DOT completely. The DOT disable command is signed by the private LAK and authenticated by the device or chip using the public LAK 318. The device or chip may have received the public LAK 318 from the external processor(s) 104 (e.g., in the DOT disable command) or via another method. The DOT disable operation 332 may involve disabling DOT locking of an associated device or chip. The DOT disable operation 332 may involve one or more steps to authenticate a signature created using a private LAK and embedded in the DOT disable command using the public LAK 318, boot with current ownership information based on the ownership RAM setting (e.g., uninitialized or with volatile ownership), read the current fuse state 312 from the fuse array (e.g., the fuses 133), generate the symmetric key 204 using the fuse state 312 and the device information 136, create a DOT blob including the public LAK 318, bind the DOT blob to the device or chip using the symmetric key 204, provide the blob for storage (e.g., in the external memory 108), update the ownership RAM with a request to update the fuse state 312, perform an L1 reset, and/or transition the fuse state 312 from even to odd. In the disabled state 308, the public CAK 316 cannot be installed (e.g., included in a DOT blob bound to the device or chip) because the fuse state 312 is odd. While in the disabled state 308, the device or chip may rely on vendor keys (e.g., installed in the fuse space by the manufacturer) for signature validation during firmware updates and/or secure boot. For example, the device or chip may use a vendor or manufacturer public CAK written to the fuse space by the vendor or manufacturer to authenticate the firmware, which is signed by a corresponding vendor or manufacturer private CAK. In some embodiments, one or more additional steps may be required at any time during said process, and/or described steps may not be required.

The volatile state 304 indicates that the device or chip has been initialized, a verified CAK 316 is present, but the fuse state 312 is even, indicating that ownership has not been claimed. In a volatile 304 state, the device or chip may perform the DOT disable operation 332, a power cycle operation 322, and/or a DOT lock operation 324 (e.g., process 400, FIG. 4).

The power cycle operation 322 transitions the device or chip from the volatile state 304 back to the uninitialized state 302. The external processor(s) 104 (e.g., operated by an owner) may send a power cycle command to the device or chip to cause it to perform the power cycle operation 322. The power cycle operation 322 turns power to the device or chip off and then back on again, which causes the loss of any ownership information stored in the ownership RAM. The power cycle operation 322 may involve one or more steps to power cycle an associated device or chip. In some embodiments, the power cycle operation 322 may be performed intentionally (e.g., in response to the power cycle command) or unintentionally. Performance of a power cycle operation 322 while the device or chip is in the volatile state 304 involves total reset of the associated device or chip, and thereby loss of any public CAK verification (e.g., verification of the public CAK 316).

The DOT lock operation 324 transitions the device or chip from the volatile state 304 to the locked state 306. The external processor(s) 104 (e.g., operated by an owner) may send a DOT lock command (e.g., DOT_LOCK) to the device or chip to cause it to perform the DOT lock operation 324. The DOT lock operation 324 is similar to the DOT disable operation 332 in that the DOT lock operation 324 may involve one or more steps to authenticate a signature signed by the private LAK and embedded in the DOT lock command using the public LAK 318, boot with current ownership information stored in the ownership RAM, read the current fuse state 312 from the fuse array (e.g., the fuses 133), generate the symmetric key 204 using the fuse state 312 and the device information 136, create a DOT blob, bind the DOT blob to the device or chip using the symmetric key 204, provide the blob for storage (e.g., in the external memory 108), update the ownership RAM with a request to update the fuse state 312, perform an L1 reset, and/or transition the fuse state 312 from even to odd. However, in addition to the public LAK 318, the DOT blob created includes the public CAK 316. The device or chip may have received the public LAK 318 and the public CAK 316 from the external processor(s) 104 or via another method. In some embodiments, one or more additional steps may be required at any time during said process, and/or described steps may not be required.

The locked state 306 may indicate that the device or chip has been initialized, the verified public CAK 316 is present, the verified public LAK 318 is present, and the fuse state 312 is odd, indicating ownership has been claimed. In the locked 306 state, the device or chip may perform a DOT unlock operation 326 (e.g., process 600, FIG. 6), a CAK rotate operation 328, and/or a DOT loss operation 330.

The DOT unlock operation 326 transitions the device or chip from the locked state 306 to the volatile state 304 or the uninitialized state 302. The external processor(s) 104 (e.g., operated by an owner) may send a DOT unlock command (e.g., DOT_UNLOCK) to the device or chip to cause it to perform the DOT unlock operation 326. The DOT unlock command is signed by the private LAK to ensure that the DOT unlock operation 326 is authorized. During the DOT unlock operation 326, the processor(s) 126 use the public LAK (stored in the DOT blob) to authenticate the DOT unlock command. Then, the processor(s) 126 update(s) the ownership RAM with a request to update the fuse state 312, and perform(s) an L1 reset, which increment the fuse state 312 by one to even.

The CAK rotate operation 328 updates or rotates the public CAK 316 (e.g., replaces a current public CAK with a different new public CAK) without changing the fuse state 312. The external processor(s) 104 (e.g., operated by an owner) may send a CAK rotate command (e.g., DOT_CAK_ROTATE) to the device or chip to cause it to perform the CAK rotate operation 328. The device or chip may receive the new public CAK from the external processor(s) 104 or via another method. The CAK rotate operation 328 may involve one or more steps to read the fuse state 312, generate the symmetric key 204 using the fuse state 312 and the device information 136, authenticate the DOT blob and obtain the public LAK 318, authenticate a signature signed by the private LAK and embedded in the CAK rotate command using the public LAK 318, boot with current ownership information based on the ownership RAM setting, read the fuse state 312, generate the symmetric key 204 using the fuse state 312 and the device information 136, generate a new DOT blob (in some embodiments, the old DOT blob may still be viable, as fuse state 312 has not changed) including the public LAK and the new public CAK, bind the new DOT blob, if created, to the device or chip using the symmetric key 204, and/or provide the new DOT blob, if created, to memory (e.g., the external memory 108). In some embodiments, one or more additional steps may be required at any time during the process, and/or described steps may not be required.

The DOT loss operation 330 transitions the device or chip from the disabled state 308 or the locked state 306 to the corrupted state 310. The processor(s) 126 may determine the DOT blob is unavailable (e.g., lost, corrupted, and/or cannot be authorized by the symmetric key 204), and may automatically perform the DOT loss operation 330. By transitioning the device or chip to the corrupted state 310, the DOT loss operation 330 may indicate that the DOT blob has been lost, corrupted, and/or is otherwise unverifiable by the device or chip.

The corrupted state 310 indicates that commands issued by the external processor(s) 104 cannot be signed or verified, preventing provision of ownership communicated in commands, and/or control of the device or chip performed by commands. As mentioned above, the device or chip may transition to the corrupted state 310 from the disabled state 308 and/or the locked state 306. While the public LAK 318 and/or the public CAK 316 may be required (e.g., to authenticate commands) for the device or chip to perform commands (e.g., issued by the external processor(s) 104), the corrupted state 310 indicates that the DOT blob has been lost, corrupted, or is otherwise unverifiable, preventing the device or chip from obtaining the public LAK 318 and/or the public CAK 316 included in the DOT blob, which prevents control of the chip. For example, when the DOT blob is unavailable, the device or chip cannot obtain the public CAK, which means the device or chip cannot authenticate the firmware and therefore cannot complete the boot process and perform other operations. In the corrupted state 310, a DOT override operation 336 may be performable.

The DOT override operation 336 transitions the device or chip from the corrupted state 310 to the uninitialized state 302 or the volatile state 304. The external processor(s) 104 (e.g., operated by an owner) may send a DOT override command (e.g., DOT_OVERRIDE) to the device or chip to cause it to perform the DOT override operation 336. The DOT override command may be signed by a private DOT recovery key that belongs to the set of vendor or manufacturer keys, ensuring that the recovery process is authorized by the vendor or manufacturer. A corresponding public DOT recovery key 314 may be stored in non-volatile memory, hardwired into the device or chip (e.g., stored in the fuse space), or otherwise ensured to be available at all times to the device or chip. In at least one embodiment, the public DOT recovery key 314 may include the device unique key created by the manufacturer (e.g., RTL key or FUSE key ) that is included in the device information 136. The DOT override command may be an out of band command signed with the private DOT recovery key, allowing the vendor, the manufacturer, and/or one or more other designated processors and/or parties to perform or assist in performing override operations. When the device or chip is in the corrupted state 310, the device or chip may boot using special recovery firmware. Then, the processor(s) 126 may use the public DOT recovery key 314 to authenticate the DOT override command. In some embodiments, the DOT override command may include a valid copy of the DOT blob. After authenticating the DOT override command, the processor(s) 126 may cause the fuse state to increment to even (which places the device or chip in the uninitialized state 302 or the volatile state 304), and/or replace the invalid DOT blob with the valid copy of the DOT blob (e.g., in the external memory 108), if provided. The DOT override operation 336 may involve one or more steps to read the fuse state 312 from the fuse array (e.g., the fuses 133), boot with current ownership information based on the ownership RAM setting, indicate or determine that the DOT blob is missing or corrupted, authenticate the DOT override command using the public DOT recovery key 314, transition the fuse state 312 indicated by the fuse array to even, and/or replace the invalid DOT blob with a valid copy of the DOT blob (e.g., in the external memory 108). In some embodiments, one or more additional steps may be required at any time during the process, and/or described steps may not be required.

When the device or chip is in the disabled state 308, DOT locking is disabled, which means the device or chip cannot process input commands that modify lock state, and/or use a DOT blob to authenticate firmware (because the DOT blob does not include the public CAK 316). In the disabled state 308, the public CAK 316 is no longer verified and is not present in the DOT blob, the fuse state 312 is odd to prevent the inclusion of the public CAK 316 in the DOT blob, and/or the public LAK 318 is still verifiable. Input commands and/or firmware (such as firmware to perform on chip processors) that in the locked state 306 would require a signature verifiable with the public CAK 316 do not require authentication to perform. In the disabled state 308, the device or chip may perform a DOT enable operation 334 to reenable DOT locking features.

The DOT enable operation 334 transitions the device or chip from the disabled state 308 to the uninitialized state 302. The external processor(s) 104 (e.g., operated by an owner) may send a DOT enable command (e.g., DOT_ENABLE) to the device or chip to cause it to perform the DOT enable operation 334. The DOT enable command re-enables DOT by transitioning the device or chip back to the uninitialized state 302, which allows new public LAK and public CAK to be installed. The DOT enable operation 334 may involve one or more steps to read the DOT fuse state 312 from the fuse array (e.g., indicating an odd, or owned, state), generate the symmetric key 204 using the fuse state 312 and the device information 136, authenticate the DOT blob and obtain the public LAK 318, boot with current ownership information based on the ownership RAM setting, authenticate a signature created using a private LAK and embedded in the DOT enable command using the public LAK 318, update the ownership RAM with a request to increase the fuse state 312, performs an L1 reset, and/or transitions the fuse state 312 to even to indicate a lack of ownership. In some embodiments, one or more additional steps may be required at any time during the process, and/or described steps may not be required.

In some embodiments, the system 300 is implemented using one or more processors to, during a boot process, use a value permanently written to a circuit component connected to one or more circuits of the one or more processors to authenticate at least a key stored externally to the one or more processors and/or use the key to authenticate at least one of a command, firmware, or software before completing the boot process, and/or otherwise perform operations described herein. In some embodiments, the system 300 is included in, and/or otherwise includes one or more systems illustrated in and/or described with respect to at least one of FIGS. 1-12 to, during a boot process, use a value permanently written to a circuit component connected to one or more circuits of a processor to authenticate at least a key stored externally to the processor and/or use the key to authenticate at least one of a command, firmware, or software before completing the boot process, and/or otherwise perform operations described herein. In some embodiments, the system 300 performs one or more processes illustrated in and/or described with respect to FIGS. 1-12, such as to, during a boot process, use a value permanently written to a circuit component connected to one or more circuits of a processor to authenticate at least a key stored externally to the processor and/or use the key to authenticate at least one of a command, firmware, or software before completing the boot process, and/or otherwise perform operations described herein. In some embodiments, one or more processes illustrated in and/or described with respect to at least one of FIGS. 1-12 perform(s) the system 300, such as to, during a boot process, use a value permanently written to a circuit component connected to one or more circuits of a processor to authenticate at least a key stored externally to the processor and/or use the key to authenticate at least one of a command, firmware, or software before completing the boot process, and/or otherwise perform operations described herein.

FIG. 4A and/or 4B may be used in conjunction with one another. FIG. 4A illustrates an example flow diagram of a process 400 that may be used to claim ownership of a hardware device or silicon chip, in accordance with at least one embodiment. The process 400 may be performed by an external processor (e.g., the external processor(s) 104) claiming ownership of a device or chip (e.g., the chip 106). For example, the ownership functionality 124 (e.g., performed by the external processor(s) 104) may perform at least a portion of the process 400 with respect to the device or chip (e.g., the chip 106). In some embodiments, part or all of the process 400 is performed by one or more processors in association with the device or chip (e.g., the chip 106) for which ownership is to be claimed. In some embodiments, some or all of the process 400 (or any other processes described herein, or variations and/or combinations thereof) is performed under control of one or more computer systems configured with computer-executable instructions and is implemented as code (e.g., computer-executable instructions, one or more computer programs, or one or more applications) executing collectively on one or more processors, by hardware, software, or combinations thereof. One or more portions of the process 400 may be performed in any suitable order, including sequential, parallel, and/or variations thereof, and while the process 400 may be depicted as a series of steps or operations, the process 400 may include altered or reordered steps or operations, or omit certain steps or operations, except where explicitly noted or logically required, such as when an output of one step or operation is used as input for another. In at least one embodiment, the process 400 is performed by one or more processors such as described in connection with FIG. 1.

At block 402, one or more external processors (e.g., the external processor(s) 104) may send one or more commands (e.g., the create blob command(s) 110, the CAK Install/Reset command, the DOT lock command, and/or the like) to claim ownership of a device or chip (e.g., the chip 106). In some embodiments, the command may be signed with one or more private keys (e.g., the private LAK 118) and/or one or more other types of keys to allow the device or chip to verify the command is issued from an authenticatable source. The commands may communicate a public CAK (e.g., the public CAK 120) or indicate how the public CAK may be obtained by the device or chip for inclusion in a DOT blob to be created and stored by the device or chip. The ownership claim commands may be issued to one or more devices and/or chips to be claimed.

At block 404, the external processor(s) (e.g., the external processor(s) 104) may receive a notification from the device or chip (e.g., the chip 106) that ownership has been established. The notification may include a valid copy of the DOT blob or indicate how the valid copy may be obtained by the external processor(s), and/or indicate that the DOT blob has been saved to one or more memory locations (e.g., the external memory 108), and/or provide indications of required information as needed.

At block 406, the external processor(s) (e.g., the external processor(s) 104) may use a private CAK (associated with the public CAK included in the DOT blob) to sign firmware (e.g., the firmware 112) associated with the device or chip. The signature (e.g., the firmware signature 115) indicates that the firmware was verified to be performed by associated device or chip hardware. The device or chip may use the public CAK that the device or chip stores as part of the DOT blob to authenticate the signature (e.g., the firmware signature 115), which establishes that the firmware is authenticate and authorized to be performed by the device or chip. In some embodiments, the operations of block 406 may be performed at any time, such as during, before, and/or after block 402 and/or block 404. The external processor(s) may deploy the firmware (e.g., the firmware 112) after the firmware is signed to one or more additional devices and/or chips, and the associated CAK may be used by such device(s) and/or chip(s) to authenticate the firmware. In some embodiments, the process 400 may end after block 406.

FIG. 4B illustrates an example flow diagram of a process 410 that may be performed by a hardware device or silicon chip in response to one or more commands claiming ownership of the hardware device or silicon chip, in accordance with at least one embodiment. The process 410 may be performed by a processor (e.g., the processor(s) 126) of the device or chip (e.g., the chip 106). For example, the blob processing functionality 140 (e.g., performed by the processor(s) 126) may perform at least a portion of the process 410. In some embodiments, part or all of the process 410 is performed by one or more processors in association with one or more external processors (e.g., the external processor(s) 104) claiming ownership of the device or chip. In some embodiments, some or all of the process 410 (or any other processes described herein, or variations and/or combinations thereof) is performed under control of one or more computer systems configured with computer-executable instructions and is implemented as code (e.g., computer-executable instructions, one or more computer programs, or one or more applications) executing collectively on one or more processors, by hardware, software, or combinations thereof. One or more portions of the process 410 may be performed in any suitable order, including sequential, parallel, and/or variations thereof, and while the process 410 may be depicted as a series of steps or operations, the process 410 may include altered or reordered steps or operations, or omit certain steps or operations, except where explicitly noted or logically required, such as when an output of one step or operation is used as input for another. In at least one embodiment, the process 410 is performed by one or more processors such as described in connection with FIG. 1.

At block 414, one or more processors (e.g., the processor(s) 126) of the device or chip may receive one or more commands (e.g., the create blob command(s) 110, the CAK Install/Reset command, the DOT lock command, and/or the like) to create a DOT blob (e.g., the DOT blob 130) and/or claim ownership of the device or chip. For example, the processor(s) may receive the command(s) sent by the external processor(s) (e.g., the external processor(s) 104) in block 402 (see FIG. 4A). One or more of the command(s) received at block 414 may be signed by a private LAK (e.g., the private LAK 118). In such a case, any authentication of the command(s) to prove authorization of issuance of such command(s) may be performed by the device or chip, for example, using a public LAK (e.g., the public LAK 116) that corresponds to the private LAK (e.g., the private LAK 118) used to sign the command(s). The public LAK may be stored in a DOT blob (e.g., that was created by the device or chip) accessible by the processor(s) of the device or chip. The processor(s) of the device or chip may access the public LAK by first authenticating the DOT blob using a symmetric key (e.g., cryptographically determined using a fuse state and/or device information), and then obtaining the public LAK from the authenticated DOT blob.

At block 416, the processor(s) (e.g., the processor(s) 126) of the device or chip may generate the DOT blob, and bind the blob to the device or chip. The processor(s) (e.g., the processor(s) 126) may bind the DOT blob to the device or chip by generating the blob algorithmically using chip device information (e.g., the device information 136) and/or indications of fuse array state (e.g., the fuse state 134). By way of another non-limiting example, the processor(s) (e.g., the processor(s) 126) may bind the DOT blob to the device or chip by generating a MAC (e.g., the MAC 138) based at least in part on at least a portion of the DOT blob, and at least a portion of a symmetric key (e.g., the symmetric key 204). The processor(s) (e.g., the processor(s) 126) may obtain the symmetric key based at least in part on at least portion of the chip device information (e.g., the device information 136), and at least a portion of the indications of fuse array state (e.g., the fuse state 134).

At block 418, the processor(s) (e.g., the processor(s) 126) of the device or chip may store the DOT blob in external memory (e.g., the external memory 108). For example, the processor(s) of the device or chip may provide the DOT blob to the external memory via an API, direct memory writing, and/or any other pertinent method. The DOT blob is a copy of the generated DOT blob as stored within local memory of the device or chip. The DOT blob may contain the MAC, one or more cryptographic keys (such as the public LAK and/or the public CAK), and/or other information (e.g., information described in conjunction with the DOT blob 130, FIG. 1).

At block 420, the processor(s) (e.g., the processor(s) 126) of the device or chip may issue an internal command to increment an associated fuse state, advancing the fuse state to a next fuse state. For example, the processor(s) of the device or chip may add a request to ownership RAM to increase the fuse state 312, and the processor(s) of the device or chip may blow a fuse (e.g., one of the fuses 133) in response to the request. In such a case, the fuse state prior to advancement indicates ownership has not been claimed (e.g., is a first one of an even integer or an odd integer), and the new state indicates ownership has been claimed (e.g., is a different second one of the even integer or the odd integer).

At block 422, the processor(s) (e.g., the processor(s) 126) of the device or chip may provide a notification to one or more external processors (e.g., the external processor(s) 104) that ownership has been successfully claimed. The notification may include one or more indications of one or more memory locations storing the DOT blob. By way of a non-limiting example, the notification may be received by the external processor(s) (e.g., the external processor(s) 104) in block 404 (see FIG. 4A). The external processor(s) may use a private CAK to sign firmware (e.g., the firmware 112) after the external processor(s) receive the notification. The processor(s) of the device or chip may use the MAC stored in or otherwise associated with the DOT blob to authenticate the DOT blob, and obtain the public CAK. Then, the processor(s) of the device or chip may use the public CAK to authenticate the firmware at boot time.

In some embodiments, the process 400 may end after block 422.

In some embodiments, as an example, a machine-readable medium having stored thereon a set of instructions, which if performed by one or more processors, cause the one or more processors to, during a boot process, use a value permanently written to a circuit component connected to one or more circuits of the one or more processors to authenticate at least a key stored externally to the one or more processors and/or use the key to authenticate at least one of a command, firmware, or software before completing the boot process, and/or otherwise perform operations described herein. In some embodiments, as an example, a machine-readable medium having stored thereon a set of instructions, which if performed by one or more processors, cause the one or more processors to perform the process 400 and/or the process 410, and/or otherwise perform operations described herein. In some embodiments, the process 400 and/or the process 410 may be performed by and/or used to implement one or more systems illustrated in and/or described with respect to at least one of FIGS. 1-12.

In reference to FIG. 5, FIG. 5 illustrates an example of a flow diagram of a process 500 to authenticate requests provided to a hardware device or silicon chip by at least one external processor, in accordance with at least one embodiment. The process 500 may be performed by a processor (e.g., the processor(s) 126) of the device or chip (e.g., the chip 106). For example, the blob processing functionality 140 (e.g., performed by the processor(s) 126) may perform at least a portion of the process 500. In some embodiments, part or all of the process 500 is performed by one or more processors in association with the chip for which the ownership is to be claimed, part or all of process 500 is performed by one or more external processors, and/or any combination thereof. In some embodiments, some or all of the process 500 (or any other processes described herein, or variations and/or combinations thereof) is performed under control of one or more computer systems configured with computer-executable instructions and is implemented as code (e.g., computer-executable instructions, one or more computer programs, or one or more applications) executing collectively on one or more processors, by hardware, software, or combinations thereof. One or more portions of the process 500 may be performed in any suitable order, including sequential, parallel, and/or variations thereof, and while the process 500 may be depicted as a series of steps or operations, the process 500 may include altered or reordered steps or operations, or omit certain steps or operations, except where explicitly noted or logically required, such as when an output of one step or operation is used as input for another. In an embodiment, the process 500 is performed by one or more processors such as described in connection with FIG. 1.

At block 502, the processor(s) (e.g., the processor(s) 126) of the device or chip may receive a boot command. The boot command may have been sent by one or more external processors (e.g., the external processor(s) 104).

At block 504, the processor(s) of the device or chip may authenticate the DOT blob (e.g., the DOT blob 130) stored within external memory (e.g., the external memory 108) via use of one or more symmetric keys (e.g., the symmetric key 204) derived from one or more device or chip identifiers (e.g., the device information 136), the fuse state (e.g., the fuse state 134), and/or a comparison of a MAC (e.g., the MAC 138) created previously for the DOT blob (e.g., stored therein or therewith) to a new MAC created based at least in part on the DOT blob and the symmetric key(s).

At block 506, the processor(s) of the device or chip use the public CAK contained in the verified DOT blob to verify a signature (e.g., the firmware signature 115) associated with firmware (e.g., the firmware 112) used to boot the device or chip. If the firmware was signed with a signature created using a private CAK, the processor(s) of the device or chip may use the public CAK to authenticate that signature to thereby authenticate the firmware. In some embodiments, if the firmware is verified, the processor(s) of the device or chip perform the functionality of the boot command. For example, the processor(s) of the device or chip may use the firmware (e.g., the firmware 112) to complete the boot process. In some embodiments, if the firmware is not verifiable, the processor(s) of the device or chip may return an indication of failure, generate one or more indications of unauthorized commands, and/or perform any other action, for example, to notify the issuer of the boot command that the boot command will not be performed. In some embodiments, the process 500 may end after block 506.

In some embodiments, one or more processors use the process 500 to, during a boot process, use a value permanently written to a circuit component connected to one or more circuits of the one or more processors to authenticate at least a key stored externally to the one or more processors and/or use the key to authenticate at least one of a boot command, firmware, or software before completing the boot process and/or otherwise perform operations described herein. In some embodiments, as an example, a machine-readable medium having stored thereon a set of instructions, which if performed by one or more processors, cause the one or more processors to, during a boot process, use a value permanently written to a circuit component connected to one or more circuits of a processor to authenticate at least a key stored externally to the processor and/or use the key to authenticate at least one of a command, firmware, or software before completing the boot process, and/or otherwise perform operations described herein. In some embodiments, as an example, a machine-readable medium having stored thereon a set of instructions, which if performed by one or more processors, cause the one or more processors to perform the process 500, and/or otherwise perform operations described herein. In some embodiments, the process 500 includes, is included in, and/or otherwise is performed by one or more systems illustrated in and/or described with respect to at least one of FIGS. 1-12 to, during a boot process, use a value permanently written to a circuit component connected to one or more circuits of a silicon chip to authenticate at least a key stored externally to the silicon chip and/or use the key to authenticate at least one of a command, firmware, or software before completing the boot process and/or otherwise perform operations described herein.

FIG. 6A and/or 6B may, in conjunction with one another. FIG. 6A illustrate an example flow diagram of a process 600 that may be used to unlock ownership of a hardware device or silicon chip, in accordance with at least one embodiment. The process 400 may be performed by an external processor (e.g., the external processor(s) 104) to remove ownership of a device or chip (e.g., the chip 106). For example, the ownership functionality 124 (e.g., performed by the external processor(s) 104) may perform at least a portion of the process 600 with respect to the device or chip (e.g., the chip 106). In some embodiments, part or all of the process 600 is performed by one or more processors in association with the device or chip for which the ownership is to be removed. In some embodiments, some or all of the process 600 (or any other processes described herein, or variations and/or combinations thereof) is performed under control of one or more computer systems configured with computer-executable instructions and is implemented as code (e.g., computer-executable instructions, one or more computer programs, or one or more applications) executing collectively on one or more processors, by hardware, software, or combinations thereof. One or more portions of the process 600 may be performed in any suitable order, including sequential, parallel, and/or variations thereof, and while the process 600 may be depicted as a series of steps or operations, the process 600 may include altered or reordered steps or operations, or omit certain steps or operations, except where explicitly noted or logically required, such as when an output of one step or operation is used as input for another. In an embodiment, the process 600 is performed by one or more processors such as described in connection with FIG. 1.

At block 602, one or more external processors (e.g., the external processor(s) 104) sends an unlock command (e.g., a DOT unlock command) to a device or chip that is locked. The unlock command instructs the locked (e.g., owned) device or chip to unlock. The unlock command may be signed using one or more cryptographic keys, such as a private LAK (e.g., the private LAK 118). The signature may be embedded in the unlock command and/or included therewith in a message from the external processor(s) to the device or chip.

At block 604, the external processor(s) (e.g., the external processor(s) 104) may receive a notification from the device or chip that ownership has been disestablished, indicating that the current DOT blob may no longer be verifiable and/or usable to authenticate commands and/or firmware.

At block 606, the external processor(s) and/or the unlock command may cause the device or chip to revert to using firmware supplied by the vendor or manufacturer (e.g., referred to as vendor firmware). After this occurs, if the device or chip receives a boot command, the device or chip will boot using the vendor firmware. The external processor(s) may provide a copy of the vendor firmware (e.g., via the unlock command) to the device or chip which may be characterized as updating the firmware to be used by the device or chip. The device or chip may authenticate the vendor firmware using the vendor key. In some embodiments, the process 600 may end after block 606. In some embodiments, signature of firmware may not be required.

FIG. 6B illustrates an example flow diagram of a process 610 that may be performed by a hardware device or silicon chip in response to an unlock command, in accordance with at least one embodiment. The process 610 may be performed by a processor (e.g., the processor(s) 126) of the device or chip (e.g., the chip 106). For example, the blob processing functionality 140 (e.g., performed by the processor(s) 126) may perform at least a portion of the process 610. In some embodiments, part or all of the process 610 is performed by one or more processors in association with one or more external processors (e.g., the external processor(s) 104) that sent the unlock command to the device or chip. In some embodiments, some or all of the process 610 (or any other processes described herein, or variations and/or combinations thereof) is performed under control of one or more computer systems configured with computer-executable instructions and is implemented as code (e.g., computer-executable instructions, one or more computer programs, or one or more applications) executing collectively on one or more processors, by hardware, software, or combinations thereof. One or more portions of the process 610 may be performed in any suitable order, including sequential, parallel, and/or variations thereof, and while the process 610 may be depicted as a series of steps or operations, the process 610 may include altered or reordered steps or operations, or omit certain steps or operations, except where explicitly noted or logically required, such as when an output of one step or operation is used as input for another. In at least one embodiment, the process 610 is performed by one or more processors such as described in connection with FIG. 1.

At block 614, one or more processors (e.g., the processor(s) 126) of the device or chip may receive an unlock command and one or more cryptographic signatures. In such a case, the unlock command may require authentication by the processor(s) of the device or chip. At block 614, the processor(s) of the device or chip may receive the unlock command sent by the external processor(s) (e.g., the external processor(s) 104) in block 602 (see FIG. 6A).

At block 616, the processor(s) of the device or chip may authenticate the cryptographic signature(s) received at block 614 using a public LAK included in a DOT blob, which is first verified using a symmetric key determined using the fuse state (e.g., the fuse state 134) and device information (e.g., the device information 136) as described herein. In some embodiments, the verification may be performed separately for each cryptographic signature provided and/or cryptographic key used.

At block 618, the processor(s) (e.g., the processor(s) 126) of the device or chip may indicate to ownership RAM to increment fuse state, then perform an L1 reset. For example, the processor(s) of the device or chip may add a request to ownership RAM to increase the fuse state 312, and the processor(s) of the device or chip may blow a fuse (e.g., one of the fuses 133) in response to the request and perform an L1 reset. Upon completion of the reset, the fuse state should be progressed, transitioning from odd to even (e.g., locked to unlocked).

At block 620, the processor(s) (e.g., the processor(s) 126) of the device or chip may provide a notification to external memory (e.g., the external memory 108) and/or one or more external processors (e.g., the external memory 108) that a DOT unlock process (e.g., the DOT unlock operation 326) has been performed, resulting in the device or chip remaining initialized but not having ownership claimed. By way of a non-limiting example, the notification may be received by the external processor(s) (e.g., the external processor(s) 104) in block 604 (see FIG. 6A).

In some embodiments, the process 600 may end after block 620.

In some embodiments, as an example, a machine-readable medium having stored thereon a set of instructions, which if performed by one or more processors, cause the one or more processors to perform the process 600 and/or the process 610, and/or otherwise perform operations described herein. In some embodiments, the process 600 and/or the process 610 may be performed by and/or used to implement one or more systems illustrated in and/or described with respect to at least one of FIGS. 1-12.

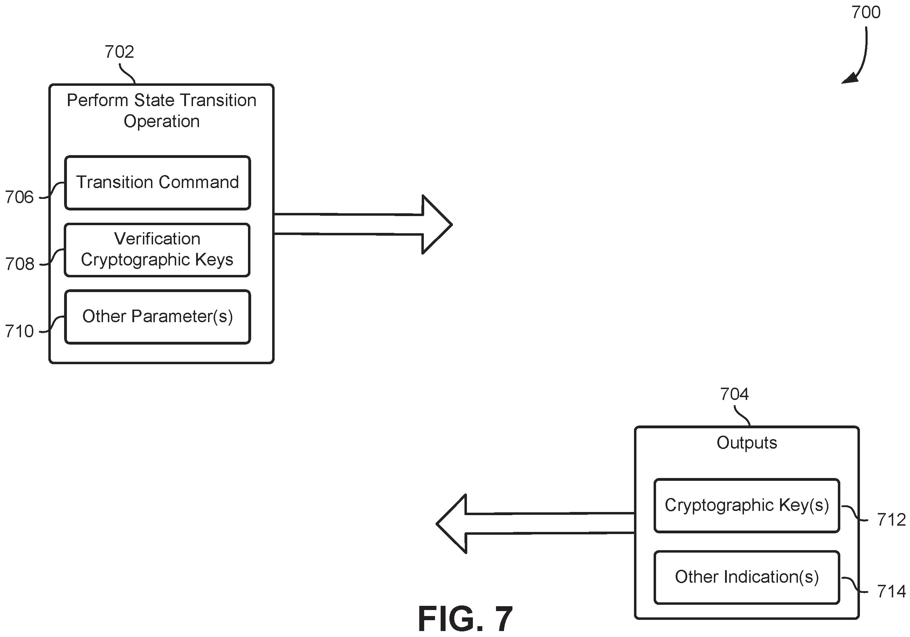

With reference to FIG. 7, FIG. 7 illustrates an example of a system 700 that includes inputs and outputs of requests, such as application programming interface (API) requests, for state change for a secured chip, in accordance with at least one embodiment. It should be understood that this and other arrangements described herein are set forth only as examples. Other arrangements and elements (e.g., machines, interfaces, functions, orders, groupings of functions, etc.) may be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by entities may be carried out by hardware, firmware, and/or software. For instance, various functions may be carried out by a processor executing instructions stored in memory.

In some embodiments, a perform state transition operation 702 may be implemented using one or more application programming interface (e.g., API) operations performed by one or more external processors to indicate to one or more processors of a device or chip that a DOT state transition (e.g., as described with respect to the system 300, process 400, process 410, process 600, and/or process 610, FIGS. 3, 4A, 4B, 6A, and/or 6B) is to be performed. In some embodiments, inputs of the operation 702 may include one or more transition commands 706, verification cryptographic keys 708, and/or other parameter(s) 710. In some embodiments, the operation 702 is responded to by one or more processors of a device or chip with outputs 704, wherein outputs 704 include one or more cryptographic key(s) 712 and/or other indications(s) 714.

The transition command(s) 706 may include one or more indications of state to be transitioned to, one or more states to be transitioned from, and/or one or more indications of processes to be performed that may transition an associated device or chip from one state to another (e.g., as defined with respect to the system 300, FIG. 3). In some embodiments, transition command 706 may not be included within an operation 702.

The verification cryptographic keys 708 may include one or more indications of cryptographic signatures to be generated by the performing external processor(s) and verified by the one or more processors of the device or chip to ensure the external processor(s) can provide proof of ownership of the device or chip. The signatures are generated based on one or more cryptographic symmetric keys, such as the public LAK and/or the public CAK, and provided to the device or chip.

Other parameter(s) 710 may include one or more other parameters required for performance of the operation 702, such as one or more memory addresses to which to output outputs 704, one or more additional state transitions to be performed in sequence, firmware to be performed by the device or chip, and/or any other required indications.

The cryptographic key(s) 712 may include one or more cryptographic keys, such as the LAK pair and/or CAK pair, that may be generated as a part of processes performed as indicated by one or more transition commands 706. The cryptographic key(s) 712 may include one or more indications of memory addresses to which the keys have been provided, indications of the cryptographic keys themselves, and/or any other indicated method of conveying cryptographic keys required for verification of further commands.

Other indication(s) 714 may include one or more indications of device fuse state, DOT blob components, outputs of other processes performed by the chip, indications of failure to perform the operation 702, indications of successful performance of the operation 702, indications of chip failure, and/or any other indications required by the operation 702.

In some embodiments, the system 700 includes one or more processors to, during a boot process, use a value permanently written to a circuit component connected to a one or more circuits of the one or more processors to authenticate at least a key stored externally to the one or more processors and/or use the key to authenticate at least one of a command, firmware, or software before completing the boot process, and/or otherwise perform operations described herein. In some embodiments, the system 700 is, is included in, and/or otherwise includes one or more systems illustrated in and/or described with respect to at least one of FIGS. 1-12 to, during a boot process, use a value permanently written to a circuit component connected to one or more circuits of a processor to authenticate at least a key stored externally to the processor and/or use the key to authenticate at least one of a command, firmware, or software before completing the boot process, and/or otherwise perform operations described herein. In some embodiments, the system 700 performs one or more processes illustrated in and/or described with respect to at least one of FIGS. 1-12, such as to, during a boot process, use a value permanently written to a circuit component connected to one or more circuits of a processor to authenticate at least a key stored externally to the processor and/or use the key to authenticate at least one of a command, firmware, or software before completing the boot process, and/or otherwise perform operations described herein.

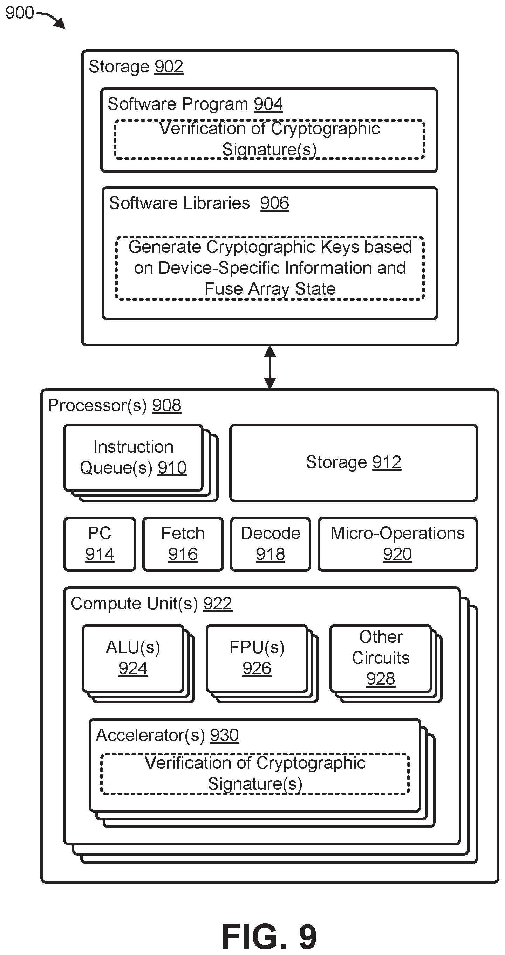

FIG. 8 illustrates an example of a system 800 that includes one or more drivers and/or one or more runtimes (illustrated as reference numeral 804) including one or more libraries 806 to provide one or more application programming interfaces ("API(s)") 810, in accordance with at least one embodiment. In at least one embodiment, the system 800 includes the driver(s) 804 and/or the runtime(s) 804 including the library(ies) 806 to provide to the API(s) 810. In at least one embodiment, the API(s) 810 is/are sets of software instructions that, if executed, cause one or more processors (e.g., processor(s) 908 illustrated in FIG. 9) to perform one or more computational operations. In at least one embodiment, one or more of the API(s) 810 is/are distributed or otherwise provided as a part of one or more of the library(ies) 806, one or more of the runtime(s) 804, one or more of the driver(s) 804, and/or one or more component of any other grouping of software and/or executable code further described herein. In at least one embodiment, one or more of the API(s) 810 perform one or more computational operations in response to invocation by one or more software programs 802.

In at least one embodiment, one or more of the software program(s) 802 is/are a software module and/or include(s) one or more software modules. In at least one embodiment, a software module is as further illustrated non-exclusively in FIG. 9 as a software program 904 (or component thereof) and described with respect thereto. In at least one embodiment, one or more of the software program(s) 802 is/are a collection of software code, commands, instructions, and/or other sequences of text to instruct a computing device (e.g., GPU, CPU, GPGPU, PPU, and/or other designation of processor) to perform one or more computational operations and/or invoke one or more other sets of instructions, such as the API(s) 810 or API function(s) 812, to be executed by the computing device. In at least one embodiment, the functions 812 generate one or more cryptographic keys based on device-specific information and/or a fuse array state used to indicate ownership, and/or verify commands and/or firmware signed using the one or more keys generated, and/or otherwise perform any of the operations described herein. In at least one embodiment, functionality provided by one or more of the API(s) 810 includes the API function(s) 812, such as those usable to accelerate one or more portions of the software program(s) 802 using one or more parallel processing units (PPUs), such as graphics processing units (GPUs).

In at least one embodiment, one or more of the API(s) 810 is/are one or more hardware interfaces to one or more circuits to perform one or more computational operations. In at least one embodiment, one or more of the API(s) 810 described herein are implemented as one or more circuits to perform one or more techniques described in connection with FIGS. 1-7. In at least one embodiment, one or more of the software program(s) 802 include instructions that, if executed, cause one or more hardware devices and/or circuits to perform one or more techniques further described in connection with FIGS. 1-7. In at least one embodiment, the system 800 includes one or more or all components of the system 100. described in relation to FIG. 1, and the system 800 may perform one or more or all of the processes and/or operations that the systems and components of the system 100 perform.

In at least one embodiment, the software program(s) 802, such as user-implemented software programs, utilize one or more of the API(s) 810 to perform various computing operations, such as memory reservation, matrix multiplication, arithmetic operations, and/or any computing operation performed by PPUs, such as GPUs, as further described herein. In at least one embodiment, the function(s) 812 include a set of callable functions provided by one or more of the API(s) 810 that are referred to herein as APIs, API functions, software functions, and/or functions, that individually perform one or more computing operations, such as computing operations related to parallel computing. In at least one embodiment, one or more of the API(s) 810 perform operation 702 (FIG. 7), and/or perform other operations described herein (e.g., in connection with FIGS. 1-7).

In at least one embodiment, one or more of the software program(s) 802 interact or otherwise communicate with one or more of the API(s) 810 to perform one or more computing operations using one or more processors (e.g., processor(s) 908 illustrated in FIG. 9), such as one or more PPUs, such as GPUs. In at least one embodiment, one or more computing operations using one or more PPUs include at least one or more groups of computing operations to be accelerated by execution at least in part by the one or more PPUs. In at least one embodiment, one or more of the software program(s) 802 interact with one or more of the API(s) 810 to operation 702 (FIG. 7), and/or perform other operations described herein (e.g., in connection with FIGS. 1-7).

In at least one embodiment, an interface is software instructions that, if executed, provide access to one or more of the function(s) 812 provided by one or more of the API(s) 810. In at least one embodiment, one or more of the software program(s) 802 use(s) a local interface when a software developer compiles one or more of the software program(s) 802 in conjunction with one or more of the library(ies) 806 including or otherwise providing access to one or more of the API(s) 810. In at least one embodiment, one or more of the software program(s) 802 is/are compiled statically in conjunction with one or more pre-compiled ones of the library(ies) 806 and/or uncompiled source code including instructions to perform one or more of the API(s) 810. In at least one embodiment, one or more of the software program(s) 802 are compiled dynamically and the dynamically compiled software program(s) utilize a linker to link to one or more pre-compiled ones of the library(ies) 806, including one or more of the API(s) 810.

In at least one embodiment, one or more of the software program(s) 802 use(s) a remote interface when a software developer executes a software program that utilizes or otherwise communicates with at least one of the library(ies) 806 including one or more of the API(s) 810 over a network or other remote communication medium. In at least one embodiment, one or more of the library(ies) 806 including one or more of the API(s) 810 are to be performed by a remote computing service, such as a computing resource services provider. In at least one embodiment, one or more of the library(ies) 806 including one or more particular APIs (of the API(s) 810) is/are to be performed by any other computing host providing the particular API(s) to one or more of the software program(s) 802.

In at least one embodiment, a processor (e.g., processor(s) 908 illustrated in FIG. 9) performing or using one or more particular ones of the software program(s) 802 calls, uses, performs, and/or otherwise implements one or more of the API(s) 810 to allocate and otherwise manage memory 814 to be used by the particular software program(s). In at least one embodiment, one or more particular ones of the software program(s) 802 utilize one or more of the API(s) 810 to allocate and otherwise manage the memory 814 to be used by one or more portions of the particular software program(s) to be accelerated using one or more PPUs, such as GPUs, or any other accelerator or processor further described herein. In at least one embodiment, one or more of the software program(s) 802 request one or more neural networks to perform signal processing using one or more of the function(s) 812 provided by one or more of the API(s) 810.

In at least one embodiment, one or more of the API(s) 810 is an API to facilitate parallel computing. In at least one embodiment, one or more of the API(s) 810 is any other API further described herein. In at least one embodiment, one or more of the API(s) 810 is/are provided by one or more of the driver(s) 804 and/or one or more of the runtime(s) 804. In at least one embodiment, one or more of the API(s) 810 is/are provided by a CUDA user-mode driver. In at least one embodiment, one or more of the API(s) 810 is/are provided by a CUDA runtime. In at least one embodiment, one or more of the driver(s) 804 is/are data values and software instructions that, if executed, perform and/or otherwise facilitate operation of one or more of the function(s) 812 of one or more of the API(s) 810 during load and execution of one or more portions of at least one of the software program(s) 802. In at least one embodiment, one or more of the runtime(s) 804 is/are data values and/or software instructions that, if executed, perform or otherwise facilitate operation of one or more of the function(s) 812 of one or more of the API(s) 810 during execution of at least one of the software program(s) 802. In at least one embodiment, one or more particular ones of the software program(s) 802 utilize one or more of the API(s) 810 implemented and/or otherwise provided by one or more of the driver(s) 804 and/or one or more of the runtime(s) 804 to perform combined arithmetic operations by the particular software program(s) during execution by one or more PPUs, such as GPUs.

In at least one embodiment, one or more of the software program(s) 802 utilize one or more of the API(s) 810 provided by one or more of the driver(s) 804 and/or one or more of the runtime(s) 804 to perform combined arithmetic operations of one or more PPUs, such as GPUs. In at least one embodiment, one or more of the API(s) 810 provide combined arithmetic operations through one or more of the driver(s) 804 and/or one or more of the runtime(s) 804, as described above. In at least one embodiment, one or more of the software program(s) 802 utilize one or more of the API(s) 810 provided by one or more of the driver(s) 804 and/or one or more of the runtime(s) 804 to allocate or otherwise reserve one or more blocks of the memory 814 of one or more PPUs, such as GPUs. In at least one embodiment, one or more of the software program(s) 802 utilize one or more of the API(s) 810 provided by one or more of the driver(s) 804 and/or one or more of the runtime(s) 804 to allocate or otherwise reserve blocks of the memory 814.

In at least one embodiment, to improve usability of one or more particular ones of the software program(s) 802 and/or improve performance, one or more portions of the particular software programs are to be accelerated by one or more PPUs (such as GPUs). In at least one embodiment, one or more of the function(s) 812 receive one or more input parameters indicating one or more inputs to one or more neural networks and/or other data to be utilized by the neural network(s), such as one or more hyperparameters of the neural network(s). In at least one embodiment, the input parameter(s) include the one or more inputs and/or the other data. In at least one embodiment, the input parameter(s) include one or more pointers to one or more memory locations where the input(s) and/or the other data is/are stored.

In at least one embodiment, the system 800 includes at least one processor (e.g., processor(s) 908 illustrated in FIG. 9) including one or more circuits to perform one or more software programs to combine two or more of the API(s) 810 into a single API. In at least one embodiment, the system 800 includes at least one processor (e.g., processor(s) 908 illustrated in FIG. 9) that uses one or more of the API(s) 810 to operation 702 (FIG. 7), and/or otherwise perform operations described herein. In at least one embodiment, the system 800 includes at least one processor (e.g., processor(s) 908 illustrated in FIG. 9) that uses one or more of the API(s) 810 to perform one or more operations illustrated in and/or described with respect to one or more of 1-7, such as one or more processes illustrated in FIGS. 1-7 or portion(s) thereof. In at least one embodiment, the system 800 includes at least one processor (e.g., processor(s) 908 illustrated in FIG. 9) to perform one or more of the function(s) 812, such as those described in connection with 1-7. In at least one embodiment, one or more of the API(s) 810 is to be performed by hardware described in connection with FIGS. 9-12.

FIG. 9 illustrates an example of a system 900 that can include software and hardware to, during a boot process, use a value permanently written to a circuit component connected to one or more circuits of a silicon chip (e.g., a processor) to authenticate at least a key stored externally to the silicon chip (e.g., ,the processor) and/or use the key to authenticate at least one of a command, firmware, or software before completing the boot process or otherwise perform any of the operations described herein, according to at least one embodiment. System 900 can include storage 902 and processor(s) 908. Storage 902 can include, for example, memory, cache, or other storage described further herein. Storage 902 can be separate from processor(s) 908, or storage 902 can be included in processor(s) 908 (e.g., in storage 912). In at least one embodiment, software program 904 and/or software libraries (or instructions) 906 can be stored in memory, cache, or other storage and provided to processor(s) 908 to cause one or more circuits of processor(s) 908 to perform operations described herein. In at least one embodiment, software program 904 and/or software libraries (or instructions) 906 can be integrated into one or more circuits of processor(s) 908. Software program 904, which can be used to perform any of the operations described herein, may be stored on storage 902.

In at least one embodiment, software program 904 can include one or more software modules. In some embodiments, one or more modules may perform generation of cryptographic keys, such as the CAK and/or LAK, the MAC, and/or other components of the DOT blob. In some embodiments, one or more modules may perform verification of firmware signatures provided alongside firmware to be performed by the chip. In some embodiments, one or more modules may verify signatures provided alongside commands to transition between chip states. In some embodiments, one or more modules may verify a given DOT blob to ensure it has not been modified. In some embodiments, one or more modules may perform other processes required by other modules, such as communication, transition of fuse array state, and/or any other required process and/or procedure.

In at least one embodiment, as used in any implementation described herein, unless otherwise clear from context or stated explicitly to contrary, a module refers to any combination of software logic, firmware logic, hardware logic, and/or circuitry configured to provide functionality described herein. In at least one embodiment, software is embodied as a software package, code and/or instruction set or instructions, and "hardware," as used in any implementation described herein, includes, for example, singly or in any combination, hardwired circuitry, programmable circuitry, state machine circuitry, fixed function circuitry, execution unit circuitry, and/or firmware that stores instructions performed by programmable circuitry. In at least one embodiment, modules are, collectively or individually, embodied as circuitry that forms part of a larger system, for example, an integrated circuit (IC), system on-chip (SoC), and so forth. In at least one embodiment, a module performs one or more processes in connection with any suitable processing unit and/or combination of processing units, such as one or more CPUs, GPUs, GPGPUs, PPUs, and/or variations thereof including those further described herein.

In at least one embodiment, software program 904 can include a collection of software code, commands, instructions, or other sequences of text to instruct a computing device to perform one or more computational operations and/or invoke one or more other sets of instructions, such as API(s) or API function(s) or Instruction Set Architecture (ISA) level instructions, to be executed or otherwise performed. Instructions (e.g., hardware instructions) or microcode can involve ISA level instructions, which can include native ISA instructions or non-native ISA instructions. Software program 904 and/or software libraries (or instructions) 906 (e.g., one or more modules) can be distributed among multiple processors that communicate over a bus, network, by writing to shared memory, and/or any suitable communication process such as those described herein.

In at least one embodiment, system 900 can include one or more software libraries 906 that can, for example, provide one or more APIs and/or ISA instructions. In at least one embodiment, one or more APIs and/or ISA instructions can be used to, during a boot process, use a value permanently written to a circuit component connected to one or more circuits of a hardware device or silicon chip to authenticate at least a key stored externally to the hardware device or silicon chip and/or use the key to authenticate at least one of a command, firmware, or software before completing the boot process. In at least one embodiment, one or more software libraries 906 can be included in drivers and/or runtimes. In at least one embodiment, software libraries 906 (e.g., including one or more APIs and/or ISA instructions) can include sets of software instructions that, if executed or otherwise performed, cause processor(s) 908 to perform one or more computational operations, such as any of the operations described herein. In at least one embodiment, one or more APIs and/or ISA instructions can be distributed or otherwise provided as a part of one or more software libraries 906, runtimes, drivers, and/or any other grouping of software and/or executable code further described herein. In at least one embodiment, one or more APIs and/or ISA instructions can perform one or more computational operations in response to invocation by software program 904.

Processor(s) 908 may include any number of processors and any suitable processing unit and/or combination of processing units, such as, but not limited to, central processing units ("CPUs"), graphics processing units ("GPUs"), or other processors (including accelerators, field programmable gate arrays (FPGAs), graphics processors, parallel processors, GPGPUs, DPUs, and/or variations thereof including those further described herein), including any processors described herein, such as, but not limited to, processors in FIGs. 9-12. In at least one embodiment, processor(s) 908 can retrieve or fetch instructions (e.g., one or more APIs and/or ISA instructions) from storage 902 using, for example, instruction fetch 916 (e.g., for an Instruction Fetch stage). Instructions can include instructions to, during a boot process, use a value permanently written to a circuit component connected to one or more circuits of a hardware device or silicon chip to authenticate at least a key stored externally to the hardware device or silicon chip and/or use the key to authenticate at least one of a command, firmware, or software before completing the boot process. In at least one embodiment, processor(s) 908 can include storage 912 and instruction queue 910 to store and queue instructions fetched from storage 902. In at least one embodiment, fetched instructions can be decoded by decode 918 to determine what operation should be performed by processor(s) 908 (e.g., in an Instruction Decode stage). In at least one embodiment, processor(s) 908 can fetch additional operands (data) that may be used for instructions, and operands can be stored, e.g., in registers or storage 912. In at least one embodiment, micro-operations 920 can perform operations on data stored in one or more registers or storage 912. For example, each step of instructions fetched by processor(s) 908 can be decomposed during execution so processor(s) 908 can execute instructions in steps through a series of micro-operations 920. In at least one embodiment, program counter (PC) 914 can hold an address for a next instruction and can be updated to point to the next instruction to be executed by processor(s) 908.

In at least one embodiment, processor(s) 908 can perform instructions (e.g., in an Execution stage). For example, processor(s) 908 can perform an operation specified by the instructions, such as an arithmetic operation, a logical operation, or a data transfer. In at least one embodiment, compute unit(s) 922 can execute instructions to perform any of the operations described herein. In at least one embodiment, compute unit(s) can include ALU(s) 924 (Arithmetic Logic Units), which may be used for performing arithmetic and logical operations. In at least one embodiment, compute unit(s) can include FPU(s) (Floating Point Units) 926, which may be used for performing floating-point calculations. In at least one embodiment, other circuits 928 can be used to perform other operations, such as vector and/or scalar operations. In at least one embodiment, accelerator(s) 930 can include one or more matrix multiplication accelerators, one or more parallel processing units (PPUs), such as GPUs, or any other accelerator or processor further described herein. In at least one embodiment, software program 904 can utilize one or more APIs and/or ISA instructions to perform various computing operations with accelerator(s) 930, such as matrix multiplication, arithmetic operations, or any other computing operation further described herein. In at least one embodiment, one or more computing operations using accelerator(s) 930 can include at least one or more groups of computing operations to be accelerated by execution at least in part by accelerator(s) 930, including to, during a boot process, use a value permanently written to a circuit component connected to the one or more circuits of a processor to authenticate at least a key stored externally to the processor and/or use the key to authenticate at least one of a command, firmware, or software before completing the boot process.
In at least one embodiment, system 900 can be used to perform one or more instructions that include functions or operations, such as those described in connection with FIGs. 1-7. In at least one embodiment, system 900 comprising one or more processors causes one or more circuits to, during a boot process, use a value permanently written to a circuit component connected to one or more circuits of the one or more processors to authenticate at least a key stored externally to the one or more processors and/or use the key to authenticate at least one of a command, firmware, or software before completing the boot process and/or otherwise perform operations described herein. In at least one embodiment, system 900 is included in and/or otherwise includes systems illustrated in FIGS. 1-7 to cause one or more circuits to, during a boot process, use a value permanently written to a circuit component connected to the one or more circuits to authenticate at least a key stored externally to the one or more circuits and/or use the key to authenticate at least one of a command, firmware, or software before completing the boot process and/or otherwise perform operations described herein. In at least one embodiment, system 900 includes hardware illustrated in FIGS. 8-12, such as to, during a boot process, use a value permanently written to a circuit component connected to one or more circuits of the hardware to authenticate at least a key stored externally to the hardware and/or use the key to authenticate at least one of a command, firmware, or software before completing the boot process and/or otherwise perform operations described herein.

### LOGIC

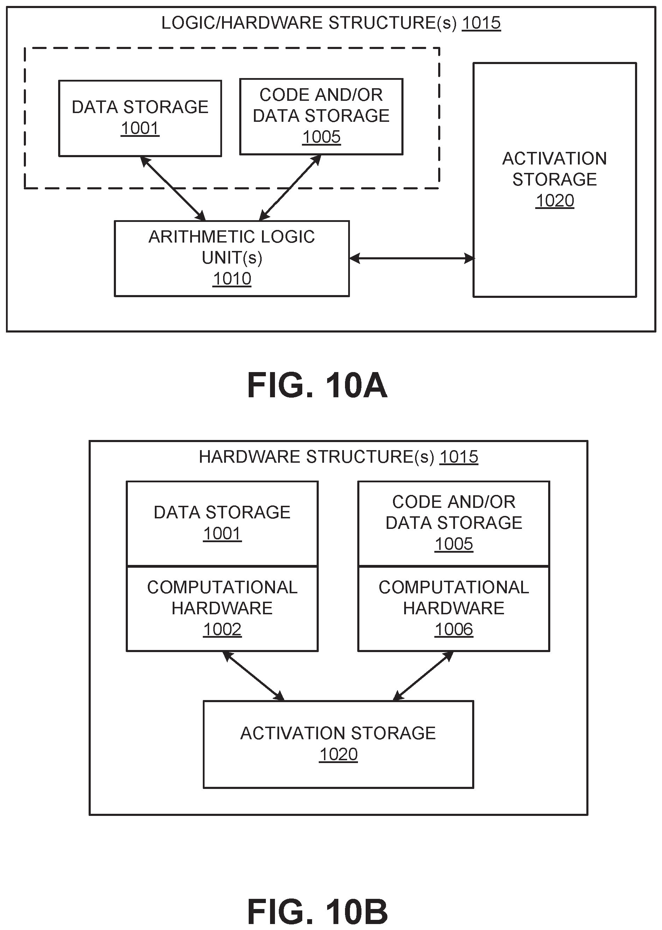

FIG. 10A illustrates logic 1015 which, as described elsewhere herein, can be used in one or more devices to perform operations such as those discussed herein in accordance with at least one embodiment. In at least one embodiment, logic 1015 is used to perform inferencing and/or training operations associated with one or more embodiments. In at least one embodiment, logic 1015 is inference and/or training logic. Details regarding logic 1015 are provided below in conjunction with FIGS. 10A and/or 10B. In at least one embodiment, logic refers to any combination of software logic, hardware logic, and/or firmware logic to provide functionality or operations described herein, wherein logic may be, collectively or individually, embodied as circuitry that forms part of a larger system, for example, an integrated circuit (IC), system-on-chip (SoC), or one or processors (e.g., CPU, GPU).

In at least one embodiment, logic 1015 may include, without limitation, code and/or data storage 1001 to store forward and/or output weight and/or input/output data, and/or other parameters to configure neurons or layers of a neural network trained and/or used for inferencing in aspects of one or more embodiments. In at least one embodiment, logic 1015 may include, or be coupled to code and/or data storage 1001 to store graph code or other software to control timing and/or order, in which weight and/or other parameter information is to be loaded to configure, logic, including integer and/or floating point units (collectively, arithmetic logic units (ALUs)). In at least one embodiment, code, such as graph code, loads weight or other parameter information into processor ALUs based on an architecture of a neural network to which such code corresponds. In at least one embodiment, code and/or data storage 1001 stores weight parameters and/or input/output data of each layer of a neural network trained or used in conjunction with one or more embodiments during forward propagation of input/output data and/or weight parameters during training and/or inferencing using aspects of one or more embodiments. In at least one embodiment, any portion of code and/or data storage 1001 may be included with other on-chip or off-chip data storage, including a processor's L1, L2, or L3 cache or system memory.

In at least one embodiment, any portion of code and/or data storage 1001 may be internal or external to one or more processors or other hardware logic devices or circuits. In at least one embodiment, code and/or code and/or data storage 1001 may be cache memory, dynamic randomly addressable memory ("DRAM"), static randomly addressable memory ("SRAM"), non-volatile memory (e.g., flash memory), or other storage. In at least one embodiment, a choice of whether code and/or code and/or data storage 1001 is internal or external to a processor, for example, or including DRAM, SRAM, flash or some other storage type may depend on available storage on-chip versus off-chip, latency requirements of training and/or inferencing functions being performed, batch size of data used in inferencing and/or training of a neural network, or some combination of these factors.

In at least one embodiment, logic 1015 may include, without limitation, a code and/or data storage 1005 to store backward and/or output weight and/or input/output data corresponding to neurons or layers of a neural network trained and/or used for inferencing in aspects of one or more embodiments. In at least one embodiment, code and/or data storage 1005 stores weight parameters and/or input/output data of each layer of a neural network trained or used in conjunction with one or more embodiments during backward propagation of input/output data and/or weight parameters during training and/or inferencing using aspects of one or more embodiments. In at least one embodiment, logic 1015 may include, or be coupled to code and/or data storage 1005 to store graph code or other software to control timing and/or order, in which weight and/or other parameter information is to be loaded to configure, logic, including integer and/or floating point units (collectively, arithmetic logic units (ALUs)).

In at least one embodiment, code, such as graph code, causes the loading of weight or other parameter information into processor ALUs based on an architecture of a neural network to which such code corresponds. In at least one embodiment, any portion of code and/or data storage 1005 may be included with other on-chip or off-chip data storage, including a processor's L1, L2, or L3 cache or system memory. In at least one embodiment, any portion of code and/or data storage 1005 may be internal or external to one or more processors or other hardware logic devices or circuits. In at least one embodiment, code and/or data storage 1005 may be cache memory, DRAM, SRAM, non-volatile memory (e.g., flash memory), or other storage. In at least one embodiment, a choice of whether code and/or data storage 1005 is internal or external to a processor, for example, or including DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, code and/or data storage 1001 and code and/or data storage 1005 may be separate storage structures. In at least one embodiment, code and/or data storage 1001 and code and/or data storage 1005 may be a combined storage structure. In at least one embodiment, code and/or data storage 1001 and code and/or data storage 1005 may be partially combined and partially separate. In at least one embodiment, any portion of code and/or data storage 1001 and code and/or data storage 1005 may be included with other on-chip or off-chip data storage, including a processor's L1, L2, or L3 cache or system memory.

In at least one embodiment, logic 1015 may include, without limitation, one or more arithmetic logic unit(s) ("ALU(s)") 1010, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 1020 that are functions of input/output and/or weight parameter data stored in code and/or data storage 1001 and/or code and/or data storage 1005. In at least one embodiment, activations stored in activation storage 1020 are generated according to linear algebraic and or matrix-based mathematics performed by ALU(s) 1010 in response to performing instructions or other code, wherein weight values stored in code and/or data storage 1005 and/or data storage 1001 are used as operands along with other values, such as bias values, gradient information, momentum values, or other parameters or hyperparameters, any or all of which may be stored in code and/or data storage 1005 or code and/or data storage 1001 or another storage on or off-chip.

In at least one embodiment, ALU(s) 1010 are included within one or more processors or other hardware logic devices or circuits, whereas in another embodiment, ALU(s) 1010 may be external to a processor or other hardware logic device or circuit that uses them (e.g., a co-processor). In at least one embodiment, ALUs 1010 may be included within a processor's execution units or otherwise within a bank of ALUs accessible by a processor's execution units either within same processor or distributed between different processors of different types (e.g., central processing units, graphics processing units, fixed function units, etc.). In at least one embodiment, code and/or data storage 1001, code and/or data storage 1005, and activation storage 1020 may share a processor or other hardware logic device or circuit, whereas in another embodiment, they may be in different processors or other hardware logic devices or circuits, or some combination of same and different processors or other hardware logic devices or circuits. In at least one embodiment, any portion of activation storage 1020 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

In at least one embodiment, activation storage 1020 may be cache memory, DRAM, SRAM, non-volatile memory (e.g., flash memory), or other storage. In at least one embodiment, activation storage 1020 may be completely or partially within or external to one or more processors or other logical circuits. In at least one embodiment, a choice of whether activation storage 1020 is internal or external to a processor, for example, or including DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, logic 1015 illustrated in FIG. 10A may be used in conjunction with an application-specific integrated circuit ("ASIC"), such as a TensorFlow^{®} Processing Unit from Google, an inference processing unit (IPU) from Graphcore^{™}, or a Nervana^{®} (e.g., "LAKe Crest") processor from Intel Corp. In at least one embodiment, logic 1015 illustrated in FIG. 10A may be used in conjunction with central processing unit ("CPU") hardware, graphics processing unit ("GPU") hardware or other hardware, such as field programmable gate arrays ("FPGAs").

FIG. 10B illustrates logic 1015, according to at least one embodiment. In at least one embodiment, logic 1015 is inference and/or training logic. In at least one embodiment, logic 1015 may include, without limitation, hardware logic in which computational resources are dedicated or otherwise exclusively used in conjunction with weight values or other information corresponding to one or more layers of neurons within a neural network. In at least one embodiment, logic 1015 illustrated in FIG. 10B may be used in conjunction with an application-specific integrated circuit (ASIC), such as TensorFlow^{®} Processing Unit from Google, an inference processing unit (IPU) from Graphcore^{™}, or a Nervana^{®} (e.g., "LAKe Crest") processor from Intel Corp. In at least one embodiment, logic 1015 illustrated in FIG. 10B may be used in conjunction with central processing unit (CPU) hardware, graphics processing unit (GPU) hardware or other hardware, such as field programmable gate arrays (FPGAs). In at least one embodiment, logic 1015 includes, without limitation, code and/or data storage 1001 and code and/or data storage 1005, which may be used to store code (e.g., graph code), weight values and/or other information, including bias values, gradient information, momentum values, and/or other parameter or hyperparameter information. In at least one embodiment illustrated in FIG. 10B, each of code and/or data storage 1001 and code and/or data storage 1005 is associated with a dedicated computational resource, such as computational hardware 1002 and computational hardware 1006, respectively. In at least one embodiment, each of computational hardware 1002 and computational hardware 1006 includes one or more ALUs that perform mathematical functions, such as linear algebraic functions, only on information stored in code and/or data storage 1001 and code and/or data storage 1005, respectively, result of which is stored in activation storage 1020.

In at least one embodiment, each of code and/or data storage 1001 and 1005 and corresponding computational hardware 1002 and 1006, respectively, correspond to different layers of a neural network, such that resulting activation from one storage/computational pair 1001/1002 of code and/or data storage 1001 and computational hardware 1002 is provided as an input to a next storage/computational pair 1005/1006 of code and/or data storage 1005 and computational hardware 1006, in order to mirror a conceptual organization of a neural network. In at least one embodiment, each of storage/computational pairs 1001/1002 and 1005/1006 may correspond to more than one neural network layer. In at least one embodiment, additional storage/computation pairs (not shown) subsequent to or in parallel with storage/computation pairs 1001/1002 and 1005/1006 may be included in logic 1015.

In at least one embodiment, one or more systems depicted in relation to preceding figures are utilized to implement techniques, functions, and/or processes described in connection with FIGS. 1-7. In at least one embodiment, at least one component of preceding figures is used to, during a boot process, use a value permanently written to a circuit component connected to one or more circuits of a hardware device or silicon chip to authenticate at least a key stored externally to the hardware device or silicon chip and/or use the key to authenticate at least one of a command, firmware, or software before completing the boot process. In at least one embodiment, at least one component of preceding figures performs at least one aspect of components within FIGS 1-7. In at least one embodiment, one or more systems depicted in preceding figures are utilized to implement one or more system and/or processes such as those described in connection with FIGS. 1-7, such as a processor comprising one or more circuits to, during a boot process, use a value permanently written to a circuit component connected to the one or more circuits to authenticate at least a key stored externally to the processor and/or use the key to authenticate at least one of a command, firmware, or software before completing the boot process.

### DATA CENTER

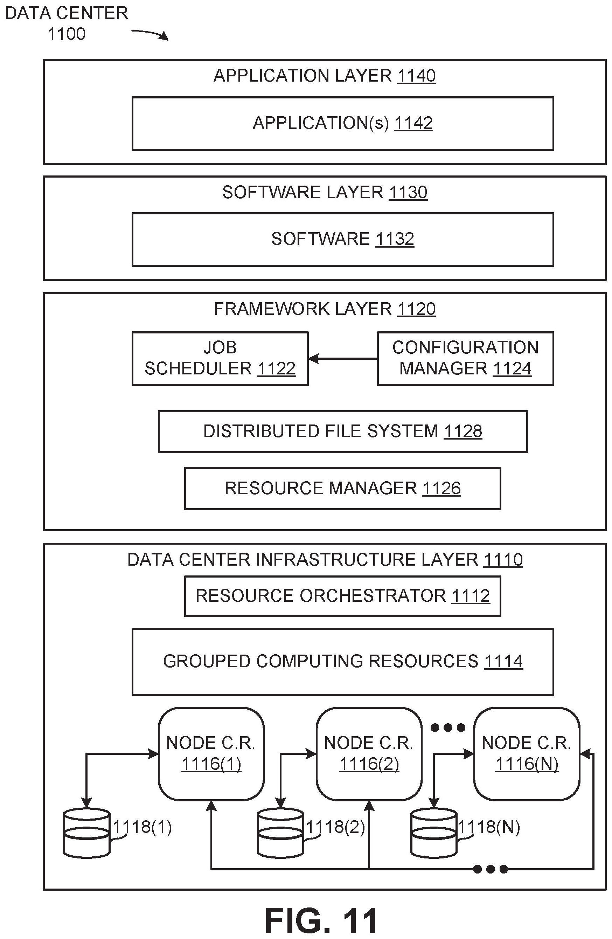

FIG. 11 illustrates an example data center 1100, in which at least one embodiment may be used. In at least one embodiment, data center 1100 includes a data center infrastructure layer 1110, a framework layer 1120, a software layer 1130 and an application layer 1140.

In at least one embodiment, as shown in FIG. 11, data center infrastructure layer 1110 may include a resource orchestrator 1112, grouped computing resources 1114, and node computing resources ("node C.R.s") 1116(1)-1116(N), where "N" represents a positive integer (which may be a different integer "N" than used in other figures). In at least one embodiment, node C.R.s 1116(1)-1116(N) may include, but are not limited to, any number of central processing units ("CPUs") or other processors (including accelerators, field programmable gate arrays (FPGAs), graphics processors, etc.), memory storage devices 1118(1)-1118(N) (e.g., dynamic read-only memory, solid state storage or disk drives), network input/output ("NW I/O") devices, network switches, virtual machines ("VMs"), power modules, and cooling modules, etc. In at least one embodiment, one or more node C.R.s from among node C.R.s 1116(1)-1116(N) may be a server having one or more of above-mentioned computing resources.

In at least one embodiment, grouped computing resources 1114 may include separate groupings of node C.R.s housed within one or more racks (not shown), or many racks housed in data centers at various geographical locations (also not shown). In at least one embodiment, separate groupings of node C.R.s within grouped computing resources 1114 may include grouped compute, network, memory or storage resources that may be configured or allocated to support one or more workloads. In at least one embodiment, several node C.R.s including CPUs or processors may be grouped within one or more racks to provide compute resources to support one or more workloads. In at least one embodiment, one or more racks may also include any number of power modules, cooling modules, and network switches, in any combination.

In at least one embodiment, resource orchestrator 1112 may configure or otherwise control one or more node C.R.s 1116(1)-1116(N) and/or grouped computing resources 1114. In at least one embodiment, resource orchestrator 1112 may include a software design infrastructure ("SDI") management entity for data center 1100. In at least one embodiment, resource orchestrator 1112 may include hardware, software or some combination thereof.

In at least one embodiment, as shown in FIG. 11, framework layer 1120 includes a job scheduler 1122, a configuration manager 1124, a resource manager 1126 and a distributed file system 1128. In at least one embodiment, framework layer 1120 may include a framework to support software 1132 of software layer 1130 and/or one or more application(s) 1142 of application layer 1140. In at least one embodiment, software 1132 or application(s) 1142 may respectively include web-based service software or applications, such as those provided by Amazon Web Services, Google Cloud and Microsoft Azure. In at least one embodiment, framework layer 1120 may be, but is not limited to, a type of free and open-source software web application framework such as Apache Spark^{™} (hereinafter "Spark") that may utilize distributed file system 1128 for large-scale data processing (e.g., "big data"). In at least one embodiment, job scheduler 1122 may include a Spark driver to facilitate scheduling of workloads supported by various layers of data center 1100. In at least one embodiment, configuration manager 1124 may be capable of configuring different layers such as software layer 1130 and framework layer 1120 including Spark and distributed file system 1128 for supporting large-scale data processing. In at least one embodiment, resource manager 1126 may be capable of managing clustered or grouped computing resources mapped to or allocated for support of distributed file system 1128 and job scheduler 1122. In at least one embodiment, clustered or grouped computing resources may include grouped computing resources 1114 at data center infrastructure layer 1110. In at least one embodiment, resource manager 1126 may coordinate with resource orchestrator 1112 to manage these mapped or allocated computing resources.

In at least one embodiment, software 1132 included in software layer 1130 may include software used by at least portions of node C.R.s 1116(1)-1116(N), grouped computing resources 1114, and/or distributed file system 1128 of framework layer 1120. In at least one embodiment, one or more types of software may include, but are not limited to, Internet web page search software, e-mail virus scan software, database software, and streaming video content software.

In at least one embodiment, application(s) 1142 included in application layer 1140 may include one or more types of applications used by at least portions of node C.R.s 1116(1)-1116(N), grouped computing resources 1114, and/or distributed file system 1128 of framework layer 1120. In at least one embodiment, one or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 1124, resource manager 1126, and resource orchestrator 1112 may implement any number and type of self-modifying actions based on any amount and type of data acquired in any technically feasible fashion. In at least one embodiment, self-modifying actions may relieve a data center operator of data center 1100 from making possibly bad configuration decisions and possibly avoiding underutilized and/or poor performing portions of a data center.

In at least one embodiment, data center 1100 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 1100. In at least one embodiment, trained machine learning models corresponding to one or more neural networks may be used to infer or predict information using resources described above with respect to data center 1100 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Logic 1015 are used to perform inferencing and/or training operations associated with one or more embodiments. Details regarding logic 1015 are provided herein in conjunction with FIGS. 10A and/or 10B. In at least one embodiment, logic 1015 may be used in data center 1100 for inferencing or predicting operations based, at least in part, on weight parameters calculated using neural network training operations, neural network functions and/or architectures, or neural network use cases described herein.

In at least one embodiment, one or more systems depicted in relation to preceding figures are utilized to implement techniques, functions, and/or processes described in connection with FIGS. 1-7. In at least one embodiment, at least one component of preceding figures is used to, during a boot process, use a value permanently written to a circuit component connected to one or more circuits of a processor to authenticate at least a key stored externally to the processor and/or use the key to authenticate at least one of a command, firmware, or software before completing the boot process. In at least one embodiment, at least one component of preceding figures performs at least one aspect of components within FIGS 1-7. In at least one embodiment, one or more systems depicted in preceding figures are utilized to implement one or more system and/or processes such as those described in connection with FIGS. 1-7, such as a processor comprising one or more circuits to, during a boot process, use a value permanently written to a circuit component connected to the one or more circuits to authenticate at least a key stored externally to the processor and/or use the key to authenticate at least one of a command, firmware, or software before completing the boot process.

### COMPUTER SYSTEMS

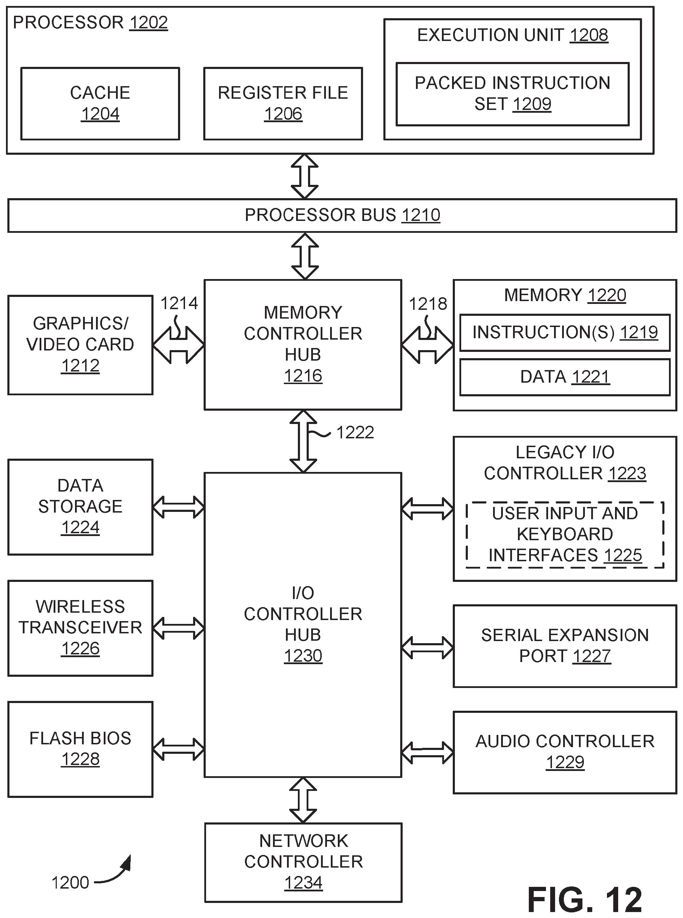

FIG. 12 is a block diagram illustrating an exemplary computer system, which may be a system with interconnected devices and components, a system-on-a-chip (SOC) or some combination thereof formed with a processor that may include execution units to execute an instruction, according to at least one embodiment. In at least one embodiment, a computer system 1200 may include, without limitation, a component, such as a processor 1202 to employ execution units including logic to perform algorithms for process data, in accordance with present disclosure, such as in embodiment described herein. In at least one embodiment, computer system 1200 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 1200 may execute a version of WINDOWS operating system available from Microsoft Corporation of Redmond, Wash., although other operating systems (UNIX and Linux, for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, computer system 1200 may include, without limitation, processor 1202 that may include, without limitation, one or more execution units 1208 to perform machine learning model training and/or inferencing according to techniques described herein. In at least one embodiment, computer system 1200 is a single processor desktop or server system, but in another embodiment, computer system 1200 may be a multiprocessor system. In at least one embodiment, processor 1202 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 1202 may be coupled to a processor bus 1210 that may transmit data signals between processor 1202 and other components in computer system 1200.

In at least one embodiment, processor 1202 may include, without limitation, a Level 1 ("L1") internal cache memory ("cache") 1204. In at least one embodiment, processor 1202 may have a single internal cache or multiple levels of internal cache. In at least one embodiment, cache memory may reside external to processor 1202. Other embodiments may also include a combination of both internal and external caches depending on particular implementation and needs. In at least one embodiment, a register file 1206 may store different types of data in various registers including, without limitation, integer registers, floating point registers, status registers, and an instruction pointer register.

In at least one embodiment, execution unit 1208, including, without limitation, logic to perform integer and floating point operations, also resides in processor 1202. In at least one embodiment, processor 1202 may also include a microcode ("ucode") read only memory ("ROM") that stores microcode for certain macro instructions. In at least one embodiment, execution unit 1208 may include logic to handle a packed instruction set 1209. In at least one embodiment, by including packed instruction set 1209 in an instruction set of a general-purpose processor, along with associated circuitry to execute instructions, operations used by many multimedia applications may be performed using packed data in processor 1202. In at least one embodiment, many multimedia applications may be accelerated and executed more efficiently by using a full width of a processor's data bus for performing operations on packed data, which may eliminate a need to transfer smaller units of data across that processor's data bus to perform one or more operations one data element at a time.

In at least one embodiment, execution unit 1208 may also be used in microcontrollers, embedded processors, graphics devices, DSPs, and other types of logic circuits. In at least one embodiment, computer system 1200 may include, without limitation, a memory 1220. In at least one embodiment, memory 1220 may be a Dynamic Random Access Memory ("DRAM") device, a Static Random Access Memory ("SRAM") device, a flash memory device, or another memory device. In at least one embodiment, memory 1220 may store instruction(s) 1219 and/or data 1221 represented by data signals that may be executed by processor 1202.

In at least one embodiment, a system logic chip may be coupled to processor bus 1210 and memory 1220. In at least one embodiment, a system logic chip may include, without limitation, a memory controller hub ("MCH") 1216, and processor 1202 may communicate with MCH 1216 via processor bus 1210. In at least one embodiment, MCH 1216 may provide a high bandwidth memory path 1218 to memory 1220 for instruction and data storage and for storage of graphics commands, data and textures. In at least one embodiment, MCH 1216 may direct data signals between processor 1202, memory 1220, and other components in computer system 1200 and to bridge data signals between processor bus 1210, memory 1220, and a system I/O interface 1222. In at least one embodiment, a system logic chip may provide a graphics port for coupling to a graphics controller. In at least one embodiment, MCH 1216 may be coupled to memory 1220 through high bandwidth memory path 1218 and a graphics/video card 1212 may be coupled to MCH 1216 through an Accelerated Graphics Port ("AGP") interconnect 1214.

In at least one embodiment, computer system 1200 may use system I/O interface 1222 as a proprietary hub interface bus to couple MCH 1216 to an I/O controller hub ("ICH") 1230. In at least one embodiment, ICH 1230 may provide direct connections to some I/O devices via a local I/O bus. In at least one embodiment, a local I/O bus may include, without limitation, a high-speed I/O bus for connecting peripherals to memory 1220, a chipset, and processor 1202. Examples may include, without limitation, an audio controller 1229, a firmware hub ("flash BIOS") 1228, a wireless transceiver 1226, a data storage 1224, a legacy I/O controller 1223 containing user input and keyboard interfaces 1225, a serial expansion port 1227, such as a Universal Serial Bus ("USB") port, and a network controller 1234. In at least one embodiment, data storage 1224 may include a hard disk drive, a floppy disk drive, a CD-ROM device, a flash memory device, or other mass storage device.

In at least one embodiment, FIG. 12 illustrates a system, which includes interconnected hardware devices or "chips", whereas in other embodiments, FIG. 12 may illustrate an exemplary SoC. In at least one embodiment, devices illustrated in FIG. 12 may be interconnected with proprietary interconnects, standardized interconnects (e.g., PCIe) or some combination thereof. In at least one embodiment, one or more components of computer system 1200 are interconnected using compute express link (CXL) interconnects.

Logic 1015 are used to perform inferencing and/or training operations associated with one or more embodiments. Details regarding logic 1015 are provided herein in conjunction with FIGS. 10A and/or 10B. In at least one embodiment, logic 1015 may be used in computer system 1200 for inferencing or predicting operations based, at least in part, on weight parameters calculated using neural network training operations, neural network functions and/or architectures, or neural network use cases described herein.

In at least one embodiment, one or more systems depicted in relation to preceding figures are utilized to implement techniques, functions, and/or processes described in connection with FIGS. 1-7. In at least one embodiment, at least one component of preceding figures is used to, during a boot process, use a value permanently written to a circuit component connected to one or more circuits of a hardware device or silicon chip to authenticate at least a key stored externally to the hardware device or silicon chip and/or use the key to authenticate at least one of a command, firmware, or software before completing the boot process. In at least one embodiment, at least one component of preceding figures performs at least one aspect of components within FIGS 1-7. In at least one embodiment, one or more systems depicted in preceding figures are utilized to implement one or more system and/or processes such as those described in connection with FIGS. 1-7, such as a processor comprising one or more circuits to, during a boot process, use a value permanently written to a circuit component connected to the one or more circuits to authenticate at least a key stored externally to the processor and/or use the key to authenticate at least one of a command, firmware, or software before completing the boot process.

At least one embodiment of the disclosure can be described in view of the following clauses:
Clause 1. A processor comprising: one or more circuits to at least: during a boot process, use a value permanently written to a circuit component connected to the one or more circuits to authenticate at least a key stored externally to the processor; and use the key to authenticate at least one of firmware or software before completing the boot process.
Clause 2. The processor of clause 1, wherein the key is associated with a first Message Authentication Code (MAC), and using the value to authenticate at least the key comprises: using the value to generate a second MAC; and authenticating at least the key based at least in part on a comparison of the first MAC and the second MAC.
Clause 3. The processor of clause 1 or 2, wherein the one or more circuits are to at least: set a bit of a hardwired fuse connected to the one or more circuits in response to a command to establish ownership of the processor.
Clause 4. The processor of any one of clauses 1-3, wherein the one or more circuits are to at least: set another bit of the hardwired fuse connected to the one or more circuits in response to a command to release ownership of the processor.
Clause 5. The processor of any one of clauses 1-4, wherein the value permanently written to the circuit component comprises a number of blown hardwired fuses present in the circuit component.
Clause 6. The processor of any one of clauses 1-5, wherein using the value to authenticate at least the key comprises: generating a data object comprising the key; using the value to generate a Message Authentication Code (MAC) associated with the data object; and using the MAC to authenticate the data object.
Clause 7. The processor of any one of clauses 1-6, wherein using the value to authenticate at least the key comprises using the value to authenticate a data object comprising the key and a lock key; and the one or more circuits are to at least: use the lock key to authenticate a change in ownership of the processor.
Clause 8. A system comprising: a series of fuses; and one or more circuits to at least: generate a data object cryptographically bound to the system, the data object to comprise a key; store the data object in memory that is external to the system but accessible by the one or more circuits; obtain a number of blown fuses in the series of fuses; use the number of blown fuses to authenticate the data object stored externally with respect to the system; and use the key to authenticate at least one of a command, firmware, or software.
Clause 9. The system of clause 8, wherein the one or more circuits are to at least: obtain a first key based at least in part on the number of blown fuses and a device identifier; and use the first key to cryptographically bind the data object to the system, wherein using the number of blown fuses to authenticate the data object comprises authenticating the data object using a second key based at least in part on the number of blown fuses and the device identifier.
Clause 10. The system of clause 8 or 9, wherein the one or more circuits are to at least: blow a fuse of the series of fuses in response to a command to establish or release ownership of the system.
Clause 11. The system of any one of clauses 8-10, wherein the data object is a binary large object (blob) cryptographically bound to the system by at least a Message Authentication Code (MAC).
Clause 12. The system of any one of clauses 8-11, wherein the system is comprised in a data center.
Clause 13. A method comprising: in response to a command to perform a boot process: using, by a silicon chip, a value permanently written to the silicon chip to determine whether the silicon chip is in a locked state; attempting, by the silicon chip, to authenticate at least a key stored externally with respect to the silicon chip if the silicon chip determines the silicon chip is in the locked state; and if attempting to authenticate the key is successful, using, by the silicon chip, the key to authenticate at least one of firmware or software before the silicon chip completes the boot process.
Clause 14. The method of clause 13, wherein attempting to authenticate at least the key comprises attempting to use the value to authenticate at least the key.
Clause 15. The method of clause 13 or 14, wherein the key is associated with a first Message Authentication Code (MAC), and attempting to use the value to authenticate at least the key comprises: using the value to generate a second MAC; and attempting to authenticate at least the key based at least in part on a comparison of the first MAC and the second MAC.
Clause 16. The method of any one of clauses 13-15, wherein attempting to use the value to authenticate at least the key comprises: generating a data object comprising the key; using the value to generate a Message Authentication Code (MAC) associated with the data object; and attempting to authenticate the data object using the MAC.
Clause 17. The method of any one of clauses 13-16, wherein attempting to use the value to authenticate at least the key comprises attempting to use the value to authenticate a data object comprising the key and a lock key; and the method further comprises: using the lock key to authenticate a change in ownership of the silicon chip if attempting to use the value to authenticate the data object is successful.
Clause 18. The method of any one of clauses 13-17, wherein the value permanently written to the silicon chip comprises a number of set bits indicated by a set of hardwired fuses, and the method further comprises: setting, by the silicon chip, a bit by blowing a first fuse of the set of hardwired fuses in response to a command to establish ownership of the silicon chip.
Clause 19. The method of any one of clauses 13-18, further comprising: setting, by the silicon chip, another bit by blowing a second fuse of the set of hardwired fuse in response to a command to release ownership of the silicon chip.
Clause 20. The method of any one of clauses 13-19, wherein the value permanently written to the silicon chip comprises a number of permanently blown hardwired fuses.

In at least one embodiment, a single semiconductor platform may refer to a sole unitary semiconductor-based integrated circuit or chip. In at least one embodiment, multi-chip modules may be used with increased connectivity which simulate on-chip operation, and make substantial improvements over utilizing a conventional central processing unit ("CPU") and bus implementation. In at least one embodiment, various modules may also be situated separately or in various combinations of semiconductor platforms per desires of user.

In at least one embodiment, computer programs in form of machine-readable executable code or computer control logic algorithms are stored in main memory and/or secondary storage such as those described herein. Computer programs, if executed by one or more processors, enable at least one system described herein to perform various functions in accordance with at least one embodiment. In at least one embodiment, memory, storage, and/or any other storage are possible examples of computer-readable media. In at least one embodiment, secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory, etc. In at least one embodiment, architecture and/or functionality of various previous figures are implemented in context of a CPU such as those described herein, a parallel processing system such as those described herein, an integrated circuit capable of at least a portion of capabilities of both the CPU, the parallel processing system, a chipset (e.g., a group of integrated circuits designed to work and sold as a unit for performing related functions, etc.), and/or any suitable combination of integrated circuit(s).

In at least one embodiment, architecture and/or functionality of various previous figures are implemented in context of a general computer system, a circuit board system, a game console system dedicated for entertainment purposes, an application-specific system, and more. In at least one embodiment, a computer system described herein may take form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic. In at least one embodiment, a computer system includes or refers to any devices illustrated in any of the drawings and/or described herein.

In at least one embodiment, a parallel processing system includes, without limitation, a plurality of parallel processing units ("PPUs") and associated memories. In at least one embodiment, PPUs are connected to a host processor or other peripheral devices via an interconnect and a switch or multiplexer. In at least one embodiment, a parallel processing system distributes computational tasks across the PPUs, which can be parallelizable - for example, as part of distribution of computational tasks across multiple graphics processing unit ("GPU") thread blocks. In at least one embodiment, memory is shared and accessible (e.g., for read and/or write access) across some or all of the PPUs, although such shared memory may incur performance penalties relative to use of local memory and registers resident to a PPU. In at least one embodiment, operation of the PPUs is synchronized through use of a command such as __syncthreads(), wherein all threads in a block (e.g., executed across multiple PPUs) to reach a certain point of execution of code before proceeding.

In at least one embodiment, one or more techniques described herein utilize a oneAPI programming model. In at least one embodiment, a oneAPI programming model refers to a programming model for interacting with various compute accelerator architectures. In at least one embodiment, oneAPI refers to an application programming interface (API) designed to interact with various compute accelerator architectures. In at least one embodiment, a oneAPI programming model utilizes a DPC++ programming language. In at least one embodiment, a DPC++ programming language refers to a high-level language for data parallel programming productivity. In at least one embodiment, a DPC++ programming language is based at least in part on C and/or C++ programming languages. In at least one embodiment, a oneAPI programming model is a programming model such as those developed by Intel Corporation of Santa Clara, CA.

In at least one embodiment, oneAPI and/or oneAPI programming model is utilized to interact with various accelerator, GPU, processor, and/or variations thereof, architectures. In at least one embodiment, oneAPI includes a set of libraries that implement various functionalities. In at least one embodiment, oneAPI includes at least a oneAPI DPC++ library, a oneAPI math kernel library, a oneAPI data analytics library, a oneAPI deep neural network library, a oneAPI collective communications library, a oneAPI threading building blocks library, a oneAPI video processing library, and/or variations thereof.

In at least one embodiment, a oneAPI DPC++ library, also referred to as oneDPL, is a library that implements algorithms and functions to accelerate DPC++ kernel programming. In at least one embodiment, oneDPL implements one or more standard template library (STL) functions. In at least one embodiment, oneDPL implements one or more parallel STL functions. In at least one embodiment, oneDPL provides a set of library classes and functions such as parallel algorithms, iterators, function object classes, range-based API, and/or variations thereof. In at least one embodiment, oneDPL implements one or more classes and/or functions of a C++ standard library. In at least one embodiment, oneDPL implements one or more random number generator functions.

In at least one embodiment, a oneAPI math kernel library, also referred to as oneMKL, is a library that implements various optimized and parallelized routines for various mathematical functions and/or operations. In at least one embodiment, oneMKL implements one or more basic linear algebra subprograms (BLAS) and/or linear algebra package (LAPACK) dense linear algebra routines. In at least one embodiment, oneMKL implements one or more sparse BLAS linear algebra routines. In at least one embodiment, oneMKL implements one or more random number generators (RNGs). In at least one embodiment, oneMKL implements one or more vector mathematics (VM) routines for mathematical operations on vectors. In at least one embodiment, oneMKL implements one or more Fast Fourier Transform (FFT) functions.

In at least one embodiment, a oneAPI data analytics library, also referred to as oneDAL, is a library that implements various data analysis applications and distributed computations. In at least one embodiment, oneDAL implements various algorithms for preprocessing, transformation, analysis, modeling, validation, and decision making for data analytics, in batch, online, and distributed processing modes of computation. In at least one embodiment, oneDAL implements various C++ and/or Java APIs and various connectors to one or more data sources. In at least one embodiment, oneDAL implements DPC++ API extensions to a traditional C++ interface and enables GPU usage for various algorithms.

In at least one embodiment, a oneAPI deep neural network library, also referred to as oneDNN, is a library that implements various deep learning functions. In at least one embodiment, oneDNN implements various neural network, machine learning, and deep learning functions, algorithms, and/or variations thereof.

In at least one embodiment, a oneAPI collective communications library, also referred to as oneCCL, is a library that implements various applications for deep learning and machine learning workloads. In at least one embodiment, oneCCL is built upon lower-level communication middleware, such as message passing interface (MPI) and libfabrics. In at least one embodiment, oneCCL enables a set of deep learning specific optimizations, such as prioritization, persistent operations, out of order executions, and/or variations thereof. In at least one embodiment, oneCCL implements various CPU and GPU functions.

In at least one embodiment, a oneAPI threading building blocks library, also referred to as oneTBB, is a library that implements various parallelized processes for various applications. In at least one embodiment, oneTBB is utilized for task-based, shared parallel programming on a host. In at least one embodiment, oneTBB implements generic parallel algorithms. In at least one embodiment, oneTBB implements concurrent containers. In at least one embodiment, oneTBB implements a scalable memory allocator. In at least one embodiment, oneTBB implements a work-stealing task scheduler. In at least one embodiment, oneTBB implements low-level synchronization primitives. In at least one embodiment, oneTBB is compiler-independent and usable on various processors, such as GPUs, PPUs, CPUs, and/or variations thereof.

In at least one embodiment, a oneAPI video processing library, also referred to as oneVPL, is a library that is utilized for accelerating video processing in one or more applications. In at least one embodiment, oneVPL implements various video decoding, encoding, and processing functions. In at least one embodiment, oneVPL implements various functions for media pipelines on CPUs, GPUs, and other accelerators. In at least one embodiment, oneVPL implements device discovery and selection in media centric and video analytics workloads. In at least one embodiment, oneVPL implements API primitives for zero-copy buffer sharing.

In at least one embodiment, a oneAPI programming model utilizes a DPC++ programming language. In at least one embodiment, a DPC++ programming language is a programming language that includes, without limitation, functionally similar versions of CUDA mechanisms to define device code and distinguish between device code and host code. In at least one embodiment, a DPC++ programming language may include a subset of functionality of a CUDA programming language. In at least one embodiment, one or more CUDA programming model operations are performed using a oneAPI programming model using a DPC++ programming language.

In at least one embodiment, any application programming interface (API) described herein is compiled into one or more instructions, operations, or any other signal by a compiler, interpreter, or other software tool. In at least one embodiment, compilation includes generating one or more machine-executable instructions, operations, or other signals from source code. In at least one embodiment, an API compiled into one or more instructions, operations, or other signals, when performed, causes one or more processors, such as graphics processors, graphics cores, parallel processor, a CPU, or any other logic circuit further described herein to perform one or more computing operations.

It should be noted that, while example embodiments described herein may relate to a CUDA programming model, techniques described herein can be utilized with any suitable programming model, such HIP, oneAPI, and/or variations thereof.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

In at least one embodiment, one or more components of systems and/or processors disclosed above can communicate with one or more CPUs, ASICs, GPUs, FPGAs, or other hardware, circuitry, or integrated circuit components that include, e.g., an upscaler or upsampler to upscale an image, an image blender or image blender component to blend, mix, or add images together, a sampler to sample an image (e.g., as part of a DSP), a neural network circuit that is configured to perform an upscaler to upscale an image (e.g., from a low resolution image to a high resolution image), or other hardware to modify or generate an image, frame, or video to adjust its resolution, size, or pixels; one or more components of systems and/or processors disclosed above can use components described in this disclosure to perform methods, operations, or instructions that generate or modify an image.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A processor comprising:
one or more circuits to at least:
during a boot process, use a value permanently written to a circuit component connected to the one or more circuits to authenticate at least a key stored externally to the processor; and
use the key to authenticate at least one of firmware or software before completing the boot process.

2. The processor of claim 1, wherein the key is associated with a first Message Authentication Code (MAC), and using the value to authenticate at least the key comprises:
using the value to generate a second MAC; and
authenticating at least the key based at least in part on a comparison of the first MAC and the second MAC.

3. The processor of claim 1, wherein the one or more circuits are to at least:
set a bit of a hardwired fuse connected to the one or more circuits in response to a command to establish ownership of the processor, wherein the one or more circuits are to at least:
set another bit of the hardwired fuse connected to the one or more circuits in response to a command to release ownership of the processor.

4. The processor of claim 1, 2, or 3, wherein the value permanently written to the circuit component comprises a number of blown hardwired fuses present in the circuit component.

5. The processor of any of claims 1-4, wherein using the value to authenticate at least the key comprises:
generating a data object comprising the key;
using the value to generate a Message Authentication Code (MAC) associated with the data object; and
using the MAC to authenticate the data object.

6. The processor of claim 1-5, wherein using the value to authenticate at least the key comprises using the value to authenticate a data object comprising the key and a lock key; and the one or more circuits are to at least:
use the lock key to authenticate a change in ownership of the processor.

7. A system comprising:
a series of fuses; and
one or more circuits to at least:
generate a data object cryptographically bound to the system, the data object to comprise a key;
store the data object in memory that is external to the system but accessible by the one or more circuits;
obtain a number of blown fuses in the series of fuses;
use the number of blown fuses to authenticate the data object stored externally with respect to the system; and
use the key to authenticate at least one of a command, firmware, or software.

8. The system of claim 7, wherein the one or more circuits are to at least:
obtain a first key based at least in part on the number of blown fuses and a device identifier; and
use the first key to cryptographically bind the data object to the system, wherein using the number of blown fuses to authenticate the data object comprises authenticating the data object using a second key based at least in part on the number of blown fuses and the device identifier.

9. The system of claim 7 or 8, wherein the one or more circuits are to at least:
blow a fuse of the series of fuses in response to a command to establish or release ownership of the system.

10. The system of claim 7, 8, or 9, wherein the data object is a binary large object (blob) cryptographically bound to the system by at least a Message Authentication Code (MAC).

11. The system of any of claims 7-10, wherein the system is comprised in a data center.

12. A method comprising:
in response to a command to perform a boot process:
using, by a silicon chip, a value permanently written to the silicon chip to determine whether the silicon chip is in a locked state;
attempting, by the silicon chip, to authenticate at least a key stored externally with respect to the silicon chip if the silicon chip determines the silicon chip is in the locked state; and
if attempting to authenticate the key is successful, using, by the silicon chip, the key to authenticate at least one of firmware or software before the silicon chip completes the boot process.

13. The method of claim 12, wherein attempting to authenticate at least the key comprises attempting to use the value to authenticate at least the key.

14. The method of claim 12 or 13, wherein the value permanently written to the silicon chip comprises a number of set bits indicated by a set of hardwired fuses, and the method further comprises:
setting, by the silicon chip, a bit by blowing a first fuse of the set of hardwired fuses in response to a command to establish ownership of the silicon chip, further comprising:
setting, by the silicon chip, another bit by blowing a second fuse of the set of hardwired fuse in response to a command to release ownership of the silicon chip.

15. The method of claim 12, 13, or 14, wherein the value permanently written to the silicon chip comprises a number of permanently blown hardwired fuses.
